(19)

Europäisches
Patentamt
European
Patent Office
Office européen
des brevets

(11)  **EP 4 428 768 A1**

(12)  **EUROPEAN PATENT APPLICATION**

(43) Date of publication:
**11.09.2024  Bulletin 2024/37**

(51) International Patent Classification (IPC):
**G06N 10/60** $^{(2022.01)}$     **G06N 10/20** $^{(2022.01)}$

(21) Application number: **23305313.1**

(22) Date of filing: **08.03.2023**

(52) Cooperative Patent Classification (CPC):
**G06N 10/60; G06N 10/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Alice & Bob
75015 Paris (FR)**

• **Association pour la Recherche et le
Développement
des Méthodes et Processus Industriels
(ARMINES)
75272 Paris Cedex 06 (FR)**

(72) Inventors:
• **ROUCHON, Pierre
75272 Paris (FR)**
• **LE REGENT, François-Marie
75015 Paris (FR)**

(74) Representative: **Cabinet Netter
36, avenue Hoche
75008 Paris (FR)**

(54)  **DEVICE AND METHOD FOR SIMULATING AN OPEN QUANTUM SYSTEM**

(57)     The invention relates to a device for simulating on a conventional computer an open quantum system including one or more quantum entities, each quantum entity being stabilized around a decoherence-free space. The corresponding simulation method is based on an original asymptotic development adapted to the so-called Heisenberg formulation of quantum mechanics and based on invariant operators of the local and nominal dynamics associated with each of the quantum entities. The nominal and local dynamics of a quantum entity refers to its own time evolution, without any external perturbation. The invariant operator of a quantum entity is a steady-state of the adjoint nominal dynamics according to the Frobenius product.

FIG. 2

EP 4 428 768 A1

**Description**

The field of the invention relates to the simulation of an open quantum system.

In physics, the Schrödinger picture - also called Schrödinger representation or Schrödinger point of view - is a formulation of quantum mechanics in which state vectors evolve in time, but operators (observables and others) are mostly constant with respect to time. It differs from the Heisenberg picture that is a formulation of quantum mechanics in which the operators incorporate a dependency on time, but the state vectors are time-independent, an arbitrary fixed basis rigidly underlying the theory.

Common Lindblad Master Equation Solvers rely on the Schrodinger picture for which the state of the initial density matrix is known and the density matrix evolves via the application of operators : Hamiltonians and dissipators.

In the case of quantum harmonic oscillators having support on an infinite-dimensional Hilbert space, a Galerkine approximation is applied such that simulation methods require a parameter generally known as truncature: the density matrix is projected on the finite-dimensional Hilbert space composed of the first N basis states. These N basis states are ordered such that, if the initial state is in the subspace generated by these states, it remains in very good approximation in this subspace during the evolution. In the case of quantum harmonic oscillator, the basis vectors are often chosen to be the energy states or Fock states to be simulated. This approximation is well suited when the quantum state remains confined to states with low contribution of high energy states as coherent states for example.

Indeed, for coherent states, the coefficients on the Fock states follow a Poissonian distribution which become exponentially small for large N.

However, in order to capture the physics of the Lindblad master equation in the numerical simulations, one has to take a truncature big enough such that the dynamics on the higher energy states is negligeable.

Even if this condition on the truncature can be achieved for a single quantum entity by taking truncature parameter of N=100 or more, it becomes a dimensional issue for composite systems.

Indeed, simulation methods in the Schrodinger picture are constrained by the size of the density matrix involved because of the exponential dependence of its size with the number of quantum entities. For n quantum entities, where n is an integer greater than or equal to 1, and assuming a truncature N for each, the size of the density matrix is $N^n$ times $N^n$.

In practice, it is computationally demanding to perform simulations of two quantum entities. For N=40 per quantum entity, the truncature required to catch the typical physics of the interaction between the two modes implies typical simulation times of the order of 10 hours.

Three quantum entities with support on the global infinite-dimensional Hilbert space are beyond what is possible to simulate in a reasonable time in the Schrödinger picture.

The present invention seeks to improve the situation

The present invention proposes a device for simulating on a conventional computer an open quantum system including one or more quantum entities, each quantum entity being stabilized around a decoherence-free space. The corresponding simulation method is based on an original asymptotic development adapted to the so-called Heisenberg formulation of quantum mechanics and based on invariant operators of the local and nominal dynamics associated with each of the quantum entities. Here, the nominal and local dynamics of a quantum entity refers to its own time evolution, without any external perturbation. The invariant operator of a quantum entity is a steady-state of the adjoint nominal dynamics according to the Frobenius product.

The simulation method relies only on local calculations associated with each of the quantum entities. The simulation method avoids calculations on the full Hilbert space of the composite systems, given by the tensor product of the Hilbert spaces of each of the quantum entities, calculations which become impossible in many applications because of the dimension of the system Hilbert space. This simulation method is particularly well suited to composite systems in quantum error correction, such as quantum error correcting codes built by concatenating bosonic qubits into discrete variable (DV) quantum error correcting codes. In this context, the simulation method gives the fidelity and error rates of logic gates between several logical qubits, knowing the errors on each of the quantum entities and the interactions between the quantum entities encoding these logical qubits. The invention avoids going through the full Hilbert space of the complete system, tensor product of the local Hilbert spaces associated with each of the quantum entities, the dimension of which is far too large to perform realistic calculations in many applications. The simulation method only exploits local calculations on the Hilbert spaces of each of the quantum entities.

More particularly, the Applicant proposes a device for simulating an open quantum system including one or more quantum entities, the open quantum system having a Hilbert space H and the one or more quantum entities each having a respective Hilbert space $H_q$, such that $H = \bigotimes_{q=1}^{n} H_q$ , where n is the number of quantum entities and $\otimes$ denotes the tensor product.

The one or more quantum entities each have a respective decoherence-free space $D_{0,q}$ which are exponential attractors and define together a decoherence-free space $D_0$ of the open quantum system with $D_0 = \bigotimes_{q=1}^{n} D_{0,q}$ ,

each decoherence-free space $D_{0,q}$ having a respective orthonormal Hermitian basis $\left\{ S_{q,d_q}^0, d_q \in [\![ 1, d_{0,q} ]\!] \right\}$ , where

$S_{q,d_q}^0$ is the $d_q$-th Hermitian of the orthonormal Hermitian basis of the decoherence-free space $D_{0,q}$ of the q-th quantum entity and $d_{0,q}$ is the dimension of the decoherence-free space $D_{0,q}$ of the q-th quantum entity.

The device comprises:

- a memory arranged to store data representing the time evolution of a Lindblad master equation defining the dynamics of a density operator $\rho$ of the open quantum system, said dynamics including at least a sum of quantum entity specific local nominal dynamics, and
- a processor arranged to apply an explicit method to said data for generating a discrete-time expression of the Lindblad master equation, splitting said discrete-time expression of the Lindblad master equation into a local nominal dynamics portion and a perturbation portion $K_1$ with an amplitude of said perturbation portion being at least five times smaller than an amplitude of said local nominal dynamics portion, and to further apply a trace-preserving and completely-positive linear Kraus map formulation to said local nominal dynamics portion such that the Kraus map $K_0$ of said local nominal dynamics portion is derived from the respective Kraus maps $K_{0,q}$ of said quantum entity specific local nominal dynamics with $K_0 = \bigotimes_{q=1}^{n} K_{0,q}$, such that $\rho_{k+1} = K_0(\rho_k) + K_1(\rho_k)$, where $\rho_k$ is the k-th time value of the time-discrete density operator.

The processor is further arranged to determine a finite set of local operators $L_{q,\mu}^1$ and $R_{q,\mu}^1$ on the Hilbert space $H_q$ such that, for any operator W on the Hilbert space H verifying $W = \bigotimes_{q=1}^{n} W_q$ , $W_q$ being a local operator on the Hilbert space $H_q$: $K_1(W) = \sum_{\mu} \bigotimes_{q=1}^{n} L_{q,\mu}^1 W_q R_{q,\mu}^1$ .

The processor is further arranged to calculate invariant operators $J_{q,d_q} = \lim_{k \to +\infty} [K_{0,q}^*]^k (S_{q,d_q}^0)$ of each quantum entity, where $K_{0,q}^*$ is the conjugate transpose of the local nominal dynamics portion $K_{0,q}$ of the q-th quantum entity.

The processor is further arranged to determine a second-order approximation of matrices F(k) modeling the time evolution of the time-discrete density operator of the open quantum system by computing:

$$F^0(k) = I$$

$$F_{(d_1',\dots,d_n'),(d_1,\dots,d_n)}^1(k) = \sum_{\mu} \prod_{q=1}^{n} Tr(J_{\mu,q,d_q'}^1(k) S_{q,d_q}^0)$$

$$F^2_{(d_1',\ldots,d_n'),(d_1,\ldots,d_n)}(k)$$

$$= \sum_{i=0}^{+\infty} \left( \sum_{\mu,\mu'} \prod_{q=1}^{n} Tr \left( J^1_{\mu',q,d_q'}(k) [K_{0,q}]^i \left( S^1_{\mu,q,d_q}(k) \right) \right) \right.$$

$$\left. - \prod_{q=1}^{n} \sum_{d_q''} Tr(J^1_{\mu',q,d_q'}(k) S^0_{q,d_q''}) Tr(J^1_{\mu,q,d_q'}(k) S^0_{q,d_q})) \right)$$

with:

$$J^1_{\mu,q,d_q'}(k) = R^1_{q,\mu}(k) J_{q,d_q'} L^1_{q,\mu}(k)$$

$$S^1_{\mu,q,d_q}(k) = L^1_{q,\mu}(k) S^0_{q,d_q} R^1_{q,d_q}(k)$$

where : I is the identity matrix on the Hilbert space H, $F^0(k)$ is a zero-order part of the matrix F(k), $F^1_{(d_1',\ldots,d_n'),(d_1,\ldots,d_n)}(k)$ is a coefficient of a first-order part $F^1(k)$ of the matrix F(k), $F^2_{(d_1',\ldots,d_n'),(d_1,\ldots,d_n)}(k)$ is a coefficient of a second-order part $F^2(k)$ of the matrix F(k), and $F(k) = F^0(k) + F^1(k) + F^2(k)$.

The processor is further arranged to determine a propagator P as a time product of the matrices F(k) for approximating a final state $\rho_f$ of the density operator $\rho$ based on an initial state $\rho_0$ of said density operator $\rho$.

The device is arranged to receive as inputs a Lindblad master equation defining the dynamics of the density operator $\rho$ of an open quantum system including one or more quantum entities to be simulated, along with the respective decoherence-free spaces $D_{0,q}$ of said one or more quantum entities and an initial state $\rho_0$ of said density operator p, to execute said processor with said inputs and derive an approximated final state $\rho_f$ of the density operator $\rho$.

According to one or more embodiments, the processor is arranged to apply an explicit Euler scheme as the explicit method.

According to one or more embodiments, the processor is arranged to apply the Kraus map formulation using the following Kraus map:

$$K_0(\rho) = U(\bar{M} U \rho U^\dagger \bar{M}^\dagger + \Delta t \left( \sum_{v} \bar{L}_v U \rho U^\dagger \bar{L}_v^\dagger \right)) U^\dagger$$

with:

$$U = e^{-i\Delta t H/2}$$

$$\bar{M} = M S^{-\frac{1}{2}}$$

$$\bar{L}_v = L_v S^{-\frac{1}{2}}$$

where: $M = I - \sum_v \frac{\Delta t}{2} L_v^\dagger L_v$ and $S = M^\dagger M + \Delta t \sum_v L_v^\dagger L_v$ ,

and where: $\Delta t$ is the time step of the explicit method, $L_v$ is a $v$-th Lindblad operator and H is a Hamiltonian of the Lindblad master equation.

According to one or more embodiments, the perturbation $K_1$ is time independent and the processor is arranged to determine the propagator $P = e^{T\frac{F}{\Delta t}}$ , where $\Delta t$ is the time step of the explicit method and T is a time quantity over which the Lindblad master equation rules the open quantum system.

According to one or more embodiments, the perturbation $K_1$ is time dependent and the processor is arranged to determine the propagator as a time-ordered product $P = \prod_{k=0}^{A} F(T - \sum_{j=0}^{k} \Delta t_j)$ , where $\Delta t_k$ is the time step of the explicit method corresponding to the k-th time value of the time-discrete density operator, T is a time quantity over which the Lindblad master equation rules the open quantum system, A is the number of time step $\Delta t_k$ over the time quantity T, and $\Delta t_0$ is equal to 0 by convention.

According to one or more embodiments, the device is arranged to receive as inputs a Lindblad master equation defining the dynamics of the density operator $\rho$ of an open quantum system including only one quantum entity to be simulated, and the processor is arranged to determine a Q-order approximation of the matrix modeling the time evolution of the time-discrete density operator of the open quantum system, Q being an integer greater than two, by implementing the following recurrence process:

$$F_{d',d}^{r} = Tr(J_{d'} K_1(S_d^{r-1}))$$

with:

$$S_d^r = \lim_{i \to +\infty} [K_0 + W_d^r]^i(0)$$

$$W_d^r = K_1(S_d^{r-1}) - \sum_{s=1}^{r} \sum_{d'=1}^{d_0} F_{d',d}^{s} S_{d'}^{r-s}$$

where: $d_0$ is the dimension of the decoherence-free space $D_0$ of the open quantum system, and $F_{d',d}^{r}$ is a coefficient of a r-order part $F^r$ of the matrix F, and $F = \sum_{r=0}^{Q} F^r$ .

According to one or more embodiments, the device is arranged to receive as inputs a Lindblad master equation defining the dynamics of the density operator $\rho$ of an open quantum system that is a quantum logic gate.

The quantum logic gate is for instance a Z-gate, a ZZ-gate, a ZZZ-gate, a CNOT-gate or a Toffoli-gate.

The present invention also relates to a method for simulating an open quantum system including one or more quantum entities, the open quantum system having a Hilbert space H and the one or more quantum entities each having a respective Hilbert space $H_q$, such that $H = \bigotimes_{q=1}^{n} H_q$ , where n is the number of quantum entities and $\otimes$ denotes the tensor product.

The one or more quantum entities each have a respective decoherence-free space $D_{0,q}$ which are exponential attractors and define together a decoherence-free space $D_0$ of the open quantum system with $D_0 = \bigotimes_{q=1}^{n} D_{0,q}$ , each decoherence-free space $D_{0,q}$ having a respective orthonormal Hermitian basis $\left\{ S_{q,d_q}^0, d_q \in [\![1, d_{0,q}]\!] \right\}$ , where $S_{q,d_q}^0$ is the $d_q$-th Hermitian of the orthonormal Hermitian basis of the decoherence-free space $D_{0,q}$ of the q-th quantum entity and $d_{0,q}$ is the dimension of the decoherence-free space $D_{0,q}$ of the q-th quantum entity.

The method is implemented by the device described above and comprises the following operations:

- receiving as inputs a Lindblad master equation defining the dynamics of a density operator $\rho$ of an open quantum system including one or more quantum entities to be simulated, said dynamics including at least a sum of quantum entity specific local nominal dynamics, along with the respective decoherence-free spaces $D_{0,q}$ of said one or more quantum entities and an initial state $\rho_0$ of said density operator p,

- applying an explicit method to said Lindblad master equation for generating a discrete-time expression thereof, splitting said discrete-time expression of the Lindblad master equation into a local nominal dynamics portion and a perturbation portion $K_1$ with an amplitude of said perturbation portion being at least five times smaller than an amplitude of said local nominal dynamics portion,

- applying a trace-preserving and completely-positive linear Kraus map formulation to said local nominal dynamics portion such that the Kraus map $K_0$ of said local nominal dynamics portion is derived from the respective Kraus maps $K_{0,q}$ of said quantum entity specific local nominal dynamics with $K_0 = \bigotimes_{q=1}^n K_{0,q}$ , such that $\rho_{k+1} = K_0(\rho_k) + K_1(\rho_k)$, where $\rho_k$ is the k-th time value of the time-discrete density operator,

- determining a finite set of local operators $L_{q,\mu}^1$ and $R_{q,\mu}^1$ on the Hilbert space $H_q$ such that, for any operator W on the Hilbert space H verifying $W = \bigotimes_{q=1}^n W_q$ , $W_q$ being a local operator on the Hilbert space $H_q$:

$$K_1(W) = \sum_\mu \bigotimes_{q=1}^n L_{q,\mu}^1 W_q R_{q,\mu}^1 \ ,$$

- calculating invariant operators $J_{q,d_q} = \lim_{k \to +\infty} [K_{0,q}^*]^k (S_{q,d_q}^0)$ of each quantum entity, where $K_{0,q}^*$ is the conjugate transpose of the local nominal dynamics portion $K_{0,q}$ of the q-th quantum entity,

- determining a second-order approximation of matrices F(k) modeling the time evolution of the time-discrete density operator of the open quantum system by computing:

$$F^0(k) = I$$

$$F^1_{(d_1',\dots,d_n'),(d_1,\dots,d_n)}(k) = \sum_\mu \prod_{q=1}^n Tr(J_{\mu,q,d_q'}^1(k) S_{q,d_q}^0)$$

$$F^2_{(d_1',\dots,d_n'),(d_1,\dots,d_n)}(k)$$

$$= \sum_{i=0}^{+\infty} (\sum_{\mu,\mu'} \prod_{q=1}^n Tr\left(J_{\mu',q,d_q'}^1(k) [K_{0,q}]^k \left(S_{\mu,q,d_q}^1(k)\right)\right)$$

$$- \prod_{q=1}^n \sum_{d_q''} Tr(J_{\mu',q,d_q'}^1(k) S_{q,d_q''}^0) Tr(J_{\mu,q,d_q''}^1(k) S_{q,d_q}^0))$$

with :

$$J_{\mu,q,d_q'}^1(k) = R_{q,\mu}^1(k) J_{q,d_q'} L_{q,\mu}^1(k)$$

$$S_{\mu,q,d_q}^1(k) = L_{q,\mu}^1(k) S_{q,d_q}^0 R_{q,d_q}^1(k)$$

where : I is the identity matrix on the Hilbert space H, $F^0(k)$ is a zero-order part of the matrix F(k),

$F^1_{(d'_1,...,d'_n),(d_1,...,d_n)}(k)$ is a coefficient of a first-order part $F^1(k)$ of the matrix F(k), $F^2_{(d'_1,...,d'_n),(d_1,...,d_n)}(k)$ is a coefficient of a second-order part $F^2(k)$ of the matrix F(k), and $F(k) = F^0(k) + F^1(k) + F^2(k)$,

- determining a propagator P as a time product of the matrices F(k), and
- deriving an approximated final state $\rho_f$ of the density operator $\rho$ by applying said propagator P to the initial state $\rho_0$ of said density operator $\rho$ of the open quantum system.

Furthermore, the present invention relates to a computer program comprising instructions whose execution, by a processor, results in the implementation of the method described above.

Finally, the present invention relates to a computer-readable storage medium comprising the computer program stored thereon.

Other features and advantages of the invention will become apparent from the following description provided for indicative and non-limiting purposes, with reference to the accompanying drawings, wherein:

- FIG. 1 schematically illustrates a device for simulating an open quantum system according to the invention,

- FIG. 2 illustrates a method for simulating an open quantum system according to the invention,

- FIG. 3 illustrates the modulus of a $\chi$ matrix obtained by using the well-known Schrödinger picture for simulating for a ZZ-gate,

- FIG. 4 illustrates the modulus of a $\chi$ matrix obtained by using the proposed simulation for a ZZ-gate,

- FIG. 5 illustrates the comparison of the evolution of coefficients of a $\chi$ matrix obtained by using the proposed simulation for a ZZ-gate and by using the well-known Schrödinger picture for simulating the same,

- FIG. 6 illustrates the comparison of the evolution of the sum of coefficients of a $\chi$ matrix that include bitflips by using the proposed simulation for a ZZ-gate and by using the well-known Schrödinger picture for simulating the same,

- FIG. 7 illustrates the modulus of a $\chi$ matrix obtained by using the proposed simulation for a ZZZ-gate,

- FIG. 8 illustrates the evolution of coefficients of a $\chi$ matrix obtained by using the proposed simulation for a ZZZ-gate,

- FIG. 9 illustrates the comparison of the evolution of the sum of coefficients of a $\chi$ matrix that include bitflips by using the proposed simulation for a ZZ-gate and by using the well-known Schrödinger picture for simulating the same,

- FIG. 10 illustrates an operation of the method represented in FIG. 2 in the case in which the open quantum system includes a single quantum entity,

- FIG. 11 illustrates the respective moduli of the real part and the imaginary part of a $\chi$ matrix obtained by using the well-known Schrödinger picture for simulating for a Z-gate,

- FIG. 12 illustrates the respective moduli of the real part and the imaginary part of a $\chi$ matrix obtained by using the proposed simulation for a Z-gate,

- FIG. 13 illustrates the comparison of the evolution of coefficients of a $\chi$ matrix responsible of Z errors obtained by using the proposed simulation for a Z-gate and by using the well-known Schrödinger picture for simulating the same,

- FIG. 14 illustrates the comparison of the evolution of coefficients of a $\chi$ matrix responsible of X errors obtained by using the proposed simulation for a Z-gate and by using the well-known Schrödinger picture for simulating the same, and

- FIG. 15 illustrates the comparison of the evolution of coefficients of a $\chi$ matrix responsible of Y errors obtained by using the proposed simulation for a Z-gate and by using the well-known Schrödinger picture for simulating the same.

The drawings and the following description are comprised for the most part of positive and well-defined features. As a result, they are not only useful in understanding the invention, but they can also be used to contribute to its definition, should the need arise.

An open quantum system is a quantum system that interacts with its external environment - also called *bath.* The interaction with the external environment significantly modifies the dynamics of a quantum system, i.e. its time evolution, and results in a loss of information.

Since a perfect isolation of quantum systems is impossible, the theory of open quantum system is an indispensable tool in practice to treat any quantum system.

Several mathematical models have been developed to describe the dynamics of an open quantum system, such as the wavefunction approach based on the well-known Schrödinger equation. This approach has several advantages such as linearity, which allows the superposition of quantum states, and unitarity, but does not allow to access to the relevant information of the open quantum system. Moreover, wavefunctions - generally expressed as $\psi$ - can only represent pure states and not mixed states.

To overcome these drawbacks, an alternative solution consists in describing the state of an open quantum system by a density operator - also called density matrix - generally noted $\rho$. The approach using the density operator $\rho$ allows to access the relevant information of the open quantum system and to represent both pure and mixed states.

Under appropriate assumptions - for instance the Born-Oppenheimer and Markov approximations - that are typically valid in the systems considered below, the time evolution of the density operator of an open quantum system can be expressed as a Lindblad master equation (also known as GKSL equation for "*Gorini-Kossakowski-Sudarshan-Lindblad equation*"). The Lindblad master equation conserves the interpretation of the density matrix as a valid quantum state since it preserves the trace and complete positivity of the density matrix. Such an equation can be written in the following form - or diagonal form:

$$\frac{d}{dt}\rho = -i[H, \rho] + \sum_{v}(L_v\rho L_v^\dagger - \frac{1}{2}(L_v^\dagger L_v\rho + \rho L_v^\dagger L_v))$$

where: - i is the imaginary unit, with $i^2 = -1$

- H is the Hamiltonian of the open quantum system, with $[H, \rho] = H\rho - \rho H,$
- $L_v$ is the $v$-th Lindblad operator - or jump operator, and
- $L_v^\dagger$ is the conjugate transpose of the $v$-th Lindblad operator.

The right-hand side of the Lindblad master equation can first be seen as a sum of a Hamiltonian part, which models the unitary part of the dynamics, corresponding to a closed evolution, and a dissipative part, which corresponds to the finite sum expressed with the Lindblad operators and models the interaction of the quantum system with its environment.

It is often the case that the dynamics of the system can be divided into two or more timescales, with a fast dynamics called the nominal dynamics and slower dynamics corresponding to perturbations of the nominal dynamics. The Lindblad master equation can then be written as follows:

$$\frac{d}{dt}\rho = \mathcal{L}_0(\rho) + \mathcal{L}_1(\rho)$$

where: $\mathcal{L}_0$ is the nominal dynamics of the density operator $\rho$ and $\mathcal{L}_1$ is the perturbation.

The perturbation can be identified within the Lindblad master equation by the fact that it is negligible compared to the nominal dynamics.

The term "negligible" should be understood here as meaning that an amplitude of the perturbation is significantly smaller than an amplitude of the nominal dynamics. Typically, and for the sake of providing a reasonable order of magnitude, one can generally consider that the perturbation is negligible compared to the nominal dynamics when the amplitude of the perturbation is five times smaller than the amplitude of the nominal dynamics:

$$5 * \|\mathcal{L}_1\| < \|\mathcal{L}_0\|$$

where: $\|\cdot\|$ is a norm.

Moreover, to further illustrate this order of magnitude difference between the nominal dynamics and the perturbation, it is known in the literature to re-formulate the Lindblad master equation with a parameter $\varepsilon$ quantifying this difference:

$$\frac{d}{dt}\rho = \mathcal{L}_0(\rho) + \varepsilon\mathcal{L}_1(\rho)$$

with: $0 \leq \varepsilon \ll 1$.

Typically, to give an order of magnitude as indication, one generally has: $0 \leq \varepsilon \leq 0.2$. In such a case, the nominal dynamics and the perturbation *per se* have respective amplitudes of the order of magnitude.

The nominal dynamics is embedded in both the Hamiltonian part and the dissipative part, as well as the perturbations. In other words:

$$\mathcal{L}_0(\rho) = -i[H_0, \rho] + \sum_{v_0}(L_{v_0}\rho L_{v_0}^\dagger - \frac{1}{2}(L_{v_0}^\dagger L_{v_0}\rho + \rho L_{v_0}^\dagger L_{v_0}))$$

$$\mathcal{L}_1(\rho) = -i[H_1, \rho] + \sum_{v_1}(L_{v_1}\rho L_{v_1}^\dagger - \frac{1}{2}(L_{v_1}^\dagger L_{v_1}\rho + \rho L_{v_1}^\dagger L_{v_1}))$$

where: $H_0$ and $H_1$ are respectively the nominal and the perturbative Hamiltonians, with $H = H_0 + H_1$, and $L_{v_0}$ and $L_{v_1}$ are the respective Lindblad operators of the nominal dynamics and the perturbations.

As an example, the particular case of a cat-qubit, i.e. a qubit able to correct at least a part of its errors autonomously without requiring redundancy, is considered hereinafter. The possibility of realizing such a qubit has been demonstrated by R. Lescanne *et al.* in "*Exponential suppression of bit-flips in a qubit encoded in an oscillator*" (Nature Physics, 2020). In particular, the cat-qubit relies on a mechanism that dissipates photons in pairs. This process pins down two computational states to separate locations in phase space. By increasing this separation, an exponential decrease of the bit-flip rate while only linearly increasing the phase-flip rate can be measured.

A cat-qubit is defined as a specifically selected two-dimensional sub-manifold of a main manifold spanned by several coherent states. As an example, the two-component cat-qubit main manifold is the span of two coherent states with equal amplitude and opposite phase; the main manifold being two-dimensional, in that case the sub-manifold is equal to the main manifold. To generalize, the 2N-component cat-qubit main manifold is the span of 2N coherent states with equal amplitudes and phase shifted by $\pi/N$ from one another.

The nominal dynamics of the cat-qubit can be expressed as follows:

$$\mathcal{L}_0(\rho) = -i[H_0, \rho] + L\rho L^\dagger - \frac{1}{2}(L^\dagger L\rho + \rho L^\dagger L)$$

with: $L = \sqrt{\kappa_2}(a^2 - \alpha^2)$ with $\alpha > 0$ and $H_0 = 0$

or, equivalently: $L = \sqrt{\kappa_2}a^2$ and $H_0 = \varepsilon_{2ph}a^2 + \varepsilon_{2ph}{}^*a^{\dagger 2}$.

where, in the last case: $\alpha$ is a complex number fixed by the ratio of $\varepsilon_{2ph}$ the amplitude of the drive to the two-photon

dissipation rate: $\alpha = \sqrt{2\epsilon_{2ph}/\kappa_2}$, and

$\kappa_2$ is the two-photon dissipation rate, a is the photon annihilation operator and $\alpha$ is a complex number defining the cat qubit.

It is known to the skilled person that the dissipative stabilization of two coherent states requires to engineer a non-linear conversion between two photons of a first mode a - also called the cat-qubit mode - that hosts the stabilized quantum manifold, and one photon of a second mode b known as buffer mode, and conversely. Such a stabilization scheme allows to suppress bit-flips exponentially with the number of photons in said two coherent states.

The jump operator L can be realized by coupling the buffer mode b to the cat-qubit and by engineering the Hamiltonian $a^2 b^\dagger$, where b is the photon annihilation operator of mode b with a pump at frequency $2\omega_a - \omega_b$ and a drive on the buffer mode at frequency $\omega_b$.

In cat-qubit architectures, the quality of the hardware is measured by the ratio of two time scales: time $1/\kappa_2$, where $\kappa_2$ is the two-photon dissipation rate that stabilizes the qubit; and time $1/\kappa_1$, where $\kappa_1$ is the one-photon loss rate. There are other sources of errors such as the phase shift at the rate $\kappa_\Phi$, thermal excitations, self-Kerr and cross-Kerr interactions, or other undesirable couplings with other quantum systems present in the vicinity of the memory, etc.

Nevertheless, the one-photon loss is the dominant error mechanism and for the sake of clarity, only this physical error mechanism is considered in what follows. In general, all that follows is valid by replacing the ratio $\kappa_1/\kappa_2$ by the sum of the rates of the error mechanisms divided by $\kappa_2$.

As an example, a perturbation of the nominal dynamics of the cat-qubit can be related to a Z-gate. The Z-gate is one of the Pauli gates and corresponds to a rotation by $\pi$ radians around the Z axis of the Bloch sphere. The Z-gate leaves the basis state $|0\rangle$ unchanged and converts the basis state $|1\rangle$ to $-|1\rangle$.

Such a perturbation can be written as follows:

$$\mathcal{L}_1(\rho) = -i[H, \rho] + \sum_{v=1}^{2} \left( L_v \rho L_v^\dagger - \frac{1}{2}(L_v^\dagger L_v \rho + \rho L_v^\dagger L_v) \right)$$

with: $H = \omega(a + a^\dagger), L_1 = \sqrt{\kappa_1}a, L_2 = \sqrt{\kappa_\Phi}a^\dagger a$

where: $\omega$ is the complex amplitude of the Hamiltonian, and $|\omega|$, $\kappa_1$, $\kappa_\Phi$ are smaller than $\kappa_2$.

By denoting $L_3 = L$, which corresponds to the two-photon dissipation term, the Lindblad master equation of the cat-qubit can be written as follows:

$$\frac{d}{dt}\rho = -i[H, \rho] + \sum_{v=1}^{3} \left( L_v \rho L_v^\dagger - \frac{1}{2}(L_v^\dagger L_v \rho + \rho L_v^\dagger L_v) \right)$$

In the context of the present invention, the open quantum system may be a composite system and thus comprise a plurality of quantum entities and not a single quantum entity as in the previous case of a single cat-qubit. When the open quantum system includes n quantum entities, where n is an integer greater than or equal to 1, the nominal dynamics of the density operator $\rho$ can be written as a sum of quantum entity specific local nominal dynamics. In other words:

$$\mathcal{L}_0(\rho) = \sum_{q=1}^{n} \mathcal{L}_{0,q}(\rho)$$

where: $\mathcal{L}_{0,q}$ is the local nominal dynamics of the q-th quantum entity of the open quantum system.

The Lindblad master equation of an open quantum system including one or more quantum entities is thus:

$$\frac{d}{dt}\rho = \sum_{q=1}^{n} \mathcal{L}_{0,q}(\rho) + \mathcal{L}_1(\rho)$$

It must be noted that the open quantum system has a Hilbert space H. The Hilbert space is well known to the skilled person in the field of quantum mechanics as it makes it possible to represent, with an infinite dimensional space, the set of quantum states of a quantum system. The Hilbert space can therefore be qualified as a state-space. Similarly, each quantum entity of the open quantum system has a respective Hilbert space $H_q$, such that:

$$H = \bigotimes_{q=1}^{n} H_q$$

where: $\otimes$ denotes the tensor product.

In order to implement numerical simulations, a Galerkin dimension reduction is used: from the infinite-dimensional Hilbert space of the quantum entity, a subspace of finite dimension including the first N Fock states from the ground state to the (N-1)-th excited state and the problem is projected on this subspace to be solved.

Moreover, due to the specific local nominal dynamics of the quantum entities, each quantum entity of the open quantum system has a decoherence-free space $D_{0,q}$. The decoherence-free space $D_{0,q}$ of the q-th quantum entity is a set of Hermitian operators with support in a finite dimensional sub-space $H_{0,q}$ of the Hilbert space H and which form the steady-states of the local nominal dynamics $\mathcal{L}_{0,q}$ of the q-th quantum entity.

In the context of the invention, the respective decoherence-free spaces $D_{0,q}$ are all exponential attractors and define together a decoherence-free space $D_0$ of the open quantum system:

$$D_0 = \bigotimes_{q=1}^{n} D_{0,q}$$

As a consequence, the decoherence-free space $D_0$ is also an exponential attractor.

In other words, any state $\rho$ of the Hilbert space converges exponentially toward a steady-state of the open quantum system, which is a solution of the nominal dynamics, with a rate exceeding a positive one independent of the initial state.

The decoherence-free space $D_{0,q}$ of the q-th quantum entity is a vector space of dimension $d_{0,q}$ with:

$$d_{0,q} = 2\dim\left(H_{0,q}\right)$$

Thus, there exists an orthonormal Hermitian basis of the decoherence-free space $D_{0,q}$:

$$D_{0,q} = span\left\{S_{q,d_q}^0, d_q \in [\![1, d_{0,q}]\!]\right\}$$

where: $S_{q,d_q}^0$ is the $d_q$-th Hermitian operator of the orthonormal Hermitian basis of the decoherence-free space $D_{0,q}$ of the q-th quantum entity.

Such an orthonormal Hermitian basis verifies:

$$Tr\left(S_{q,d_q}^0 S_{q,d_q'}^0\right) = \delta_{d_q,d_q'}$$

where: - $Tr(\cdot)$ is the trace, and

- $\delta_{d_q,d_q'}$ is the Kronecker delta equal to 1 if $d_q$ and $d_q'$ are equal, and 0 otherwise.

For any local Hermitian operator $\rho_q$ on the Hilbert space $H_q$ in the decoherence-free space $D_{0,q}$, there exists a vector $X = (x_{d_q}, d_q \in [\![1, d_{0,q}]\!]$ such that:

$$\rho_q = \sum_{d_q=1}^{d_{0,q}} x_{d_q} S_{q,d_q}^0$$

After these local considerations, reference is made again to the general formulation of the Lindblad master equation of the density operator ρ of an open quantum system.

A classical approach in numerical analysis for obtaining an approximation of the solution of a time-dependent differential equation of a system is to use explicit methods. An explicit method allows to obtain a time-discrete expression of the differential equation in which the state of the system at a given time is expressed as a function of the state of the system at the previous time. For this purpose, a time step $\Delta t$ is chosen for separating two consecutive instants.

Here, an explicit method is applied to the Lindblad master equation of the density operator ρ of an open quantum system, which allows to obtain an equation of the following form:

$$\rho_{k+1} = EM(\rho_k)$$

where: $\rho_k$ is the k-th time value of the time-discrete density operator and EM is the function depending on the selected explicit method and the chose time step $\Delta t$.

Among the known explicit methods, it is for example possible to use an explicit Euler scheme. The relation between the state of the density operator ρ at an instant $t_{k+1}$ and the state of the density operator ρ at the previous instant $t_k$ is then the following:

$$\frac{d\rho}{dt}(t_k) = \dot{\rho}(t_k) = \frac{\rho(t_{k+1}) - \rho(t_k)}{t_{k+1} - t_k} = \frac{\rho_{k+1} - \rho_k}{t_{k+1} - t_k}$$

Thus:

$$\rho_{k+1} = \dot{\rho}(t_k)(t_{k+1} - t_k) + \rho_k$$

The skilled person understands here that it is possible to use other explicit methods than the explicit Euler scheme, for example explicit Runge-Kutta methods.

As explained above, the dynamics of the Lindblad master equation of the density operator ρ includes at least a sum of quantum entity specific local nominal dynamics and, generally, a perturbation. The application of the explicit method to the Lindblad master equation preserves this separation in the sense that the expression of $\rho_{k+1}$ as a function of $\rho_k$ can also be split into a local nominal dynamics portion and a perturbation portion, as previously explained, the local nominal dynamics portion and the perturbation portion can be distinguished since the perturbation portion has a negligible norm compared to the local nominal dynamics portion. In other words:

$$\rho_{k+1} = EM_0(\rho_k) + K_1(\rho_k)$$

with:

$$\|K_1\| \ll \|EM_0 - I\|$$

where: $EM_0$ is the local nominal dynamics portion, while $K_1$ is the perturbation portion.

The term "negligible" should be interpreted in the same way as above. Here again, one can generally consider that the perturbation portion is negligible compared to the nominal local dynamics portion when the amplitude of the perturbation portion is five times smaller than the amplitude of the local nominal dynamics portion:

$$5 * \|K_1\| < \|EM_0 - I\|$$

Concerning more specifically the local nominal dynamics portion $EM_0$, a Kraus map formulation can be applied thereto.

Kraus' theorem characterizes completely positive and trace-preserving maps that model quantum operations between quantum states. Informally, the theorem ensures that the action of any such quantum operation O on a state $\rho$ can always be written as follows:

$$O(\rho) = \sum_k B_k \rho B_k^\dagger$$

for some set of operators $B_k$ satisfying $\sum_k B_k^\dagger B_k = 1$, where 1 is the identity operator.

The used Kraus map is a quantum channel, i.e. a trace-preserving and completely-positive linear map. Indeed, a quantum channel makes it possible to preserve fundamental properties of the density operator $\rho$ of the open quantum system, namely a trace equal to 1 and positivity.

To this end, the Applicant has found some Kraus maps, such as the Kraus map below:

$$K_0(\rho) = U(\bar{M} U \rho U^\dagger \bar{M}^\dagger + \Delta t \left( \sum_v \bar{L}_v U \rho U^\dagger \bar{L}_v^\dagger \right)) U^\dagger$$

with:

$$U = e^{-i\Delta t H/2}$$

$$\bar{M} = M S^{-\frac{1}{2}}$$

$$\bar{L}_v = L_v S^{-\frac{1}{2}}$$

where: $M = I - \sum_v \frac{\Delta t}{2} L_v^\dagger L_v$ and $S = M^\dagger M + \Delta t \sum_v L_v^\dagger L_v$ ,

The application of an explicit method to the Lindblad master equation of the density operator $\rho$ of the open quantum system, then the Kraus map formulation of the local nominal dynamics portion finally allows to obtain an equation of the following form:

$$\rho_{k+1} = K_0(\rho_k) + K_1(\rho_k)$$

Furthermore, as previously explained above, the invention deals with an open quantum system including one or more quantum entities, so that the nominal dynamics of the density operator $\rho$ is a sum of quantum entity specific local nominal dynamics. This property of the nominal dynamics results, after application of the Kraus map formulation, in that the Kraus map $K_0$ of the local nominal dynamics portion derives from the respective Kraus maps $K_{0,q}$ of the quantum entity specific local nominal dynamics. This relation is written as follows:

$$K_0 = \bigotimes_{q=1}^n K_{0,q}$$

Strictly speaking, it should be understood here that the Kraus map $K_{0,q}$ of the q-th quantum entity of the open quantum system is more exactly the Kraus map formulation of the local nominal dynamics of the q-th quantum entity after applying the explicit method to this local nominal dynamics.

On the other hand, concerning the perturbation portion $K_1$, the latter can be expressed as follows :

$$K_1(\rho) = -i\Delta t[H, \rho] + \Delta t(\sum_{v}(L_v \rho L_v^\dagger - \frac{1}{2}(L_v^\dagger L_v \rho + \rho L_v^\dagger L_v)))$$

Moreover, the invention falls within a particular context in which the perturbation of the open quantum system presents a specific property for the operators which are separable.

As mentioned above, the open quantum system has a Hilbert space H and each quantum entity of the open quantum system has a respective Hilbert space $H_q$.

A separable operator W on the Hilbert space H can be written as a tensor product of respective local operators $W_q$ of Hilbert spaces $H_q$:

$$W = \otimes_{q=1}^{n} W_q$$

The perturbation portion $K_1$ is such that, for any separable operator W on the Hilbert space H, there exists a finite set of local operator pairs $L_{q,\mu}^1$ and $R_{q,\mu}^1$ on $H_q$ such that:

$$K_1(W) = \sum_{\mu} \otimes_{q=1}^{n} L_{q,\mu}^1 W_q R_{q,\mu}^1$$

As detailed in the following description, the core of the invention relies on the synergy between, on the one hand, the intrinsically local character of the nominal dynamics of the open quantum system and, on the other hand, the fact that the perturbation, although not local, can be expressed as a finite sum of tensor products with a finite number of pairs of local operators.

Such a synergy allows to have a sufficiently accurate approximation of the evolution of the density operator $\rho$ and thus of the state of the open quantum system without requiring too high computational resources.

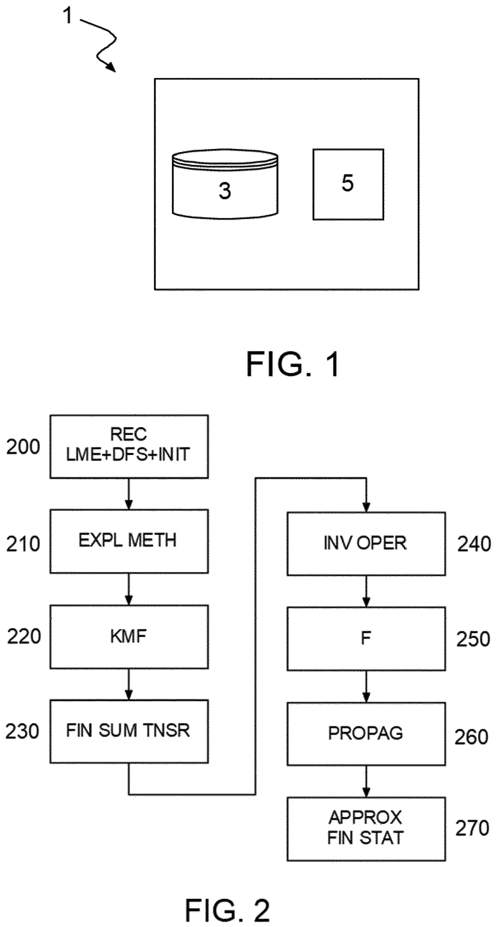

To this end, FIG. 1 illustrates a device 1 for simulating an open quantum system including one or more quantum entities. More generally, such an open quantum system includes a number n of quantum entities, where n is an integer greater than or equal to two. In addition, the simulation of the open quantum system is performed by simulating the time evolution of its density operator $\rho$ whose Lindblad master equation has been previously mentioned and discussed.

The device 1 is arranged to receive as inputs a Lindblad master equation defining the dynamics of the density operator $\rho$ of an open quantum system including one or more quantum entities to be simulated, along with the respective decoherence-free spaces $D_{0,q}$ of the quantum entities and an initial state $\rho_0$ of the density operator $\rho$ and to derive an approximated final state $\rho_f$ of the density operator $\rho$. More particularly, the device 1 receives the operators of the Lindblad master equation, i.e. the Lindblad operators of the dissipative part and, if applicable, the Hamiltonian part.

As illustrated in FIG. 1, the device 1 comprises a memory 3 and a processor 5.

The memory 3 is arranged to store data representing the time evolution of a Lindblad master equation defining the dynamics of the density operator $\rho$ of the open quantum system. As mentioned above, the dynamics includes at least a sum of quantum entity specific local nominal dynamics.

More generally, the memory 3 is arranged to store instructions whose execution, by the processor 5, results in the simulation of the open quantum system.

The memory 3 can be any data storage medium arranged to receive and store digital data, for instance a hard disk, a semiconductor disk or more generally any computer component dedicated to the storage of data on flash memory. The memory 3 can also be a random access memory (RAM) or a magneto-optical disk. A combination of several types of data storage can also be envisaged.

The processor 5 is arranged to generate a propagator of the open quantum system dynamics. Such a propagator allows, from the initial state $\rho_0$ of the open quantum system, to derive the final state $\rho_f$. The wording "final state" is to be understood here as the state of the open quantum system after a period of time over which the Lindblad master equation rules the open quantum system. The processor 5 is further arranged to apply the propagator to the initial state $\rho_0$ of the open quantum system to simulate the same and determine the final state $\rho_f$ thereof.

The propagator is a function that specifies the probability amplitude for a particle to travel from one place to another in a given period of time, or to travel with a certain energy and momentum. For example, for a time independent Hamiltonian H, the time evolution operator or propagator is the unitary operator $U: t \rightarrow \exp\left(-iHt/\hbar\right)$ where $\hbar$ is the reduced Planck constant.

The functioning of the processor 5 will be described hereinafter with reference to FIG. 2 which represents the simulation of the open quantum system.

The processor 5 can be a microprocessor, a programmable logic device (PLD) or a dedicated chip of field programmable gate array (FPGA) or system on chip (SoC) type, a grid of computer resources, a microcontroller or any other specific form that has the necessary computing power to implement the method for simulating the open quantum system. One or more of these elements can also be implemented in the form of specialized electronic circuits such as an application-specific integrated circuit (ASIC). A combination of processors and electronic circuits can also be envisaged.

A method for simulating an open quantum system including one or more quantum entities is now described with reference to FIG. 2.

In an operation 200, the device 1 receives as inputs the Lindblad master equation defining the dynamics of the density operator $\rho$ of the open quantum system including one or more quantum entities to be simulated, along with the respective decoherence-free spaces $D_{0,q}$ of the quantum entities and the initial state $\rho_0$ of the density operator $\rho$.

As previously mentioned, the open quantum system typically comprises a plurality of quantum entities, in which case it is a composite open quantum system.

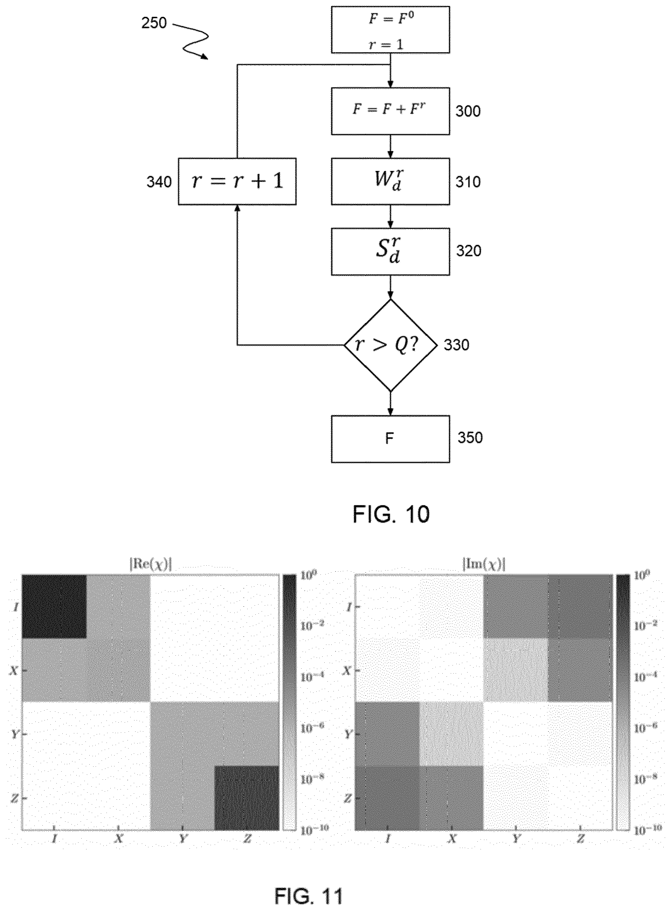

However, it is also possible to simulate an open quantum system with a single quantum entity, in which case the system coincides with the single quantum entity it contains. This case will be discussed more particularly with reference to FIG. 10.

The inputs can be stored in the memory 3 of the device 1.

In an operation 210, the processor 5 applies an explicit method to the Lindblad master equation for generating a discrete-time expression thereof.

As explained above, the discrete-time expression of the Lindblad master equation is split into a local nominal dynamics portion $EM_0$ and a perturbation portion $K_1$. The amplitude of the perturbation portion is negligible compared to the amplitude of the local nominal dynamics portion $EM_0$-I.

The explicit method is for instance an explicit Euler scheme.

In an operation 220, the processor 5 applies a trace-preserving and completely-positive linear Kraus map formulation to the local nominal dynamics portion $EM_0$. The Kraus map $K_0$ of the local nominal dynamics portion is derived from the respective Kraus maps $K_{0,q}$ of the quantum entity specific local nominal dynamics with

$$K_0 = \otimes_{q=1}^{n} K_{0,q}.$$

The time-discretization via Kraus map of the Lindblad master equation is written as follows:

$$\rho_{k+1} = K_0(\rho_k) + K_1(\rho_k)$$

In an operation 230, the processor determines a finite set of pairs of local operators $L_{q,\mu}^1$ and $R_{q,\mu}^1$, each pair of local operators ($L_{q,\mu}^1$, $R_{q,\mu}^1$) being on the corresponding Hilbert space $H_q$. As previously explained, this finite set of pairs of local operators is such that $K_1\left(\otimes_{q=1}^{n} W_q\right) = \sum_{\mu} \otimes_{q=1}^{n} L_{q,\mu}^1 W_q R_{q,\mu}^1$ for all local operators $W_q$ each on the corresponding Hilbert space $H_q$.

In an operation 240, the processor 5 calculates the invariant operators of each quantum entity:

$$J_{q,d_q} = \lim_{i \to +\infty} \left[K_{0,q}^*\right]^i (S_{q,d_q}^0)$$

with:

$$Tr\left(J_{d_q} S^0_{d'_q}\right) = \delta_{d_q, d'_q}$$

where: $K^*_{0,q}$ is the conjugate transpose of the local nominal dynamics portion $K_{0,q}$ of the q-th quantum entity.

For a given quantum entity, the processor 5 calculates a number $d_{0,q}$ of invariant operators.

It can be noticed that, for any local Hermitian operators $\rho_q$ and $W_q$ on the Hilbert space H4:

$$\lim_{i \to +\infty} [K_{0,q}]^i(\rho_q) = \sum_{d_q=1}^{d_{0,q}} Tr(J_{d_q}\rho_q) S^0_{q,d_q}$$

and:

$$\lim_{i \to +\infty} [K^*_{0,q}]^i(W_q) = \sum_{d_q=1}^{d_{0,q}} Tr(S^0_{q,d_q} W_q) J_{d_q}$$

The invariant operators of the q-th quantum entity allow to retrieve the coordinates of any local Hermitian operator $\rho_q$ in the Hermitian orthonormal basis (for the Frobenius product) of $D_{0,q} \left\{ S^0_{q,d_q}, d_q \in [\![1, d_{0,q}]\!] \right\}$ and $Tr(J_{d_q}\rho_q)$ can thus be seen as a scalar product:

$$\rho_q = \sum_{d_q=1}^{d_{0,q}} x_{d_q} S^0_{q,d_q}$$

Then:

$$J_{d'_q}\rho_q = \sum_{d_q=1}^{d_{0,q}} x_{d_q} J_{d'_q} S^0_{q,d_q}$$

Then:

$$Tr(J_{d'_q}\rho_q) = \sum_{d_q=1}^{d_{0,q}} x_{d_q} Tr(J_{d'_q} S^0_{q,d_q})$$

Thus:

$$Tr(J_{d'_q} \rho_q) = \sum_{d_q=1}^{d_{0,q}} x_{d_q} \delta_{d_q,d'_q} = x_{d'_q}$$

In an operation 250, the processor 5 determines a second-order approximation of a matrix F modeling the time evolution of the time-discrete density operator of the open quantum system. The matrix F is written as follows:

$$F = F^0 + F^1 + F^2$$

where: $F^0$ is the zero-order part of the matrix F, $F^1$ is the first-order part of the matrix F and $F^2$ is the second-order part of the matrix F. Here, $F^0$, $F^1$ and $F^2$ relate to the perturbative expansion and are not powers of F.

It can be noted that the matrix F is a $(d_{0,1}\times...\times d_{0,n})\times(d_{0,1}\times...\times d_{0,n})$. The same applies for the matrices $F^0$, $F^1$ and $F^2$.

As detailed below, the matrix F is used by the processor 5 to build a propagator for determining the final state of the open quantum system based on the initial state.

The zero-order part $F^0$ of the matrix F is the identity matrix:

$$F^0 = I$$

The respective coefficients of the first-order part $F^1$ and the second-order part $F^2$ of the matrix F are calculated as follows:

$$F^1_{(d'_1,...,d'_n),(d_1,...,d_n)} = \sum_{\mu} \prod_{q=1}^{n} Tr(J^1_{\mu,q,d'_q} S^0_{q,d_q})$$

$$F^2_{(d'_1,...,d'_n),(d_1,...,d_n)}$$

$$= \sum_{i=0}^{+\infty} (\sum_{\mu,\mu'} \prod_{q=1}^{n} Tr\left(J^1_{\mu',q,d'_q}[K_{0,q}]^i \left(S^1_{\mu,q,d_q}\right)\right)$$

$$- \prod_{q=1}^{n} \sum_{d''_q} Tr(J^1_{\mu',q,d'_q} S^0_{q,d''_q}) Tr(J^1_{\mu,q,d''_q} S^0_{q,d_q}))$$

with:

$$J^1_{\mu,q,d'_q} = R^1_{q,\mu} J_{q,d'_q} L^1_{q,\mu}$$

$$S^1_{\mu,q,d_q} = L^1_{q,\mu} S^0_{q,d_q} R^1_{q,d_q}$$

where : I is the identity matrix on the Hilbert space H, $F^1_{(d'_1,...,d'_n),(d_1,...,d_n)}$ is a coefficient of a first-order part $F^1$ of the matrix F and $F^2_{(d'_1,...,d'_n),(d_1,...,d_n)}$ is a coefficient of a second-order part $F^2$ of the matrix F.

The previous expression of the matrix F is time independent, which is the case when the perturbation portion

$K_1$ is itself time independent. However, this is not always the case and it is possible to have a time-discrete expression of the perturbation portion $K_1$:

$$K_1 \Rightarrow K_1(k)$$

which induces time-discrete expressions for the pairs of local operators $L^1_{q,\mu}$ and $R^1_{q,\mu}$ :

$$L^1_{q,\mu} \Rightarrow L^1_{q,\mu}(k)$$

$$R^1_{q,\mu} \Rightarrow R^1_{q,\mu}(k)$$

As a consequence, the zero-order part, the first-order part and the second-order part are time-dependent:

$$F^0(k) = I$$

$$F^1_{(d'_1,\ldots,d'_n),(d_1,\ldots,d_n)}(k) = \sum_\mu \prod_{q=1}^n Tr(J^1_{\mu,q,d'_q}(k)S^0_{q,d_q})$$

$$F^2_{(d'_1,\ldots,d'_n),(d_1,\ldots,d_n)}(k)$$

$$= \sum_{i=0}^{+\infty}(\sum_{\mu,\mu'}\prod_{q=1}^n Tr\left(J^1_{\mu',q,d'_q}(k)[K_{0,q}]^k\left(S^1_{\mu,q,d_q}(k)\right)\right)$$

$$- \prod_{q=1}^n \sum_{d''_q} Tr(J^1_{\mu',q,d'_q}(k)S^0_{q,d''_q})Tr(J^1_{\mu,q,d''_q}(k)S^0_{q,d_q}))$$

with:

$$J^1_{\mu,q,d'_q}(k) = R^1_{q,\mu}(k)J_{q,d'_q}L^1_{q,\mu}(k)$$

$$S^1_{\mu,q,d_q}(k) = L^1_{q,\mu}(k)S^0_{q,d_q}R^1_{q,d_q}(k)$$

In an operation 260, the processor 5 determines a propagator P as a time product of the matrix F.

The perturbation portion $K_1$ can be time independent - or more exactly constant over time - in which case the matrix F is also time independent. Conversely, the perturbation portion $K_1$ can be time dependent, in which case the matrix F is also time dependent. These two cases result in different expressions for the propagator P.

Thus, if the perturbation portion $K_1$ is time independent, the propagator P is the following:

$$P = e^{T\frac{F}{\Delta t}}$$

where: T is a time quantity over which the Lindblad master equation rules the open quantum system.

If the perturbation portion $K_1$ is time dependent, the processor 5 determines the propagator P as a time-ordered product:

$$P = \prod_{k=0}^{T/\Delta t} F(T - k\Delta t) = F_T \times F_{T-\Delta t} \times \ldots \times F_{\Delta t} \times F_0$$

In the previous equation, the time step $\Delta t$ is time independent and is thus constant over the time. However, the explicit method used in the operation 210 can also be applied to the Lindblad master equation such that the time step $\Delta t$ varies from one iteration to the next. In such a case, the time step corresponding to the k-th time value of the time-discrete density operator is noted $\Delta t_k$. In such a case, the propagator P determined by the processor 5, when the perturbation portion $K_1$ is time independent, can be expressed as the following time-ordered product:

$$P = \prod_{k=0}^{\Lambda} F(T - \sum_{j=0}^{k} \Delta t_j) = F_T \times F_{T-\Delta t_1} \times \ldots \times F_0$$

where: A is the number of time steps $\Delta t_k$ over the time quantity T, and $\Delta t_0$ is equal to 0 by convention.

Finally, in an operation 270, the processor 5 derives an approximated final state prof the density operator $\rho$ by applying the propagator P to the initial state $\rho_0$ of the density operator $\rho$ of the open quantum system. In other words:

$$\rho_f = P \cdot \rho_0$$

For an open quantum system including one or more entities, it is thus possible to determine a propagator P as a function of the matrix F, a second-order approximation of which can be computed with limited computational resources. This computation takes advantage of both the local character of the nominal dynamics and the fact that the perturbation is decomposable into a finite sum of tensor products of local operators.

The simulation of an open quantum system including a plurality of quantum entities is particularly appropriate to simulate a quantum logic gate involving two or more qubits. As an example, the results obtained for a ZZ-gate as well as for a ZZZ-gate are discussed below.

For the sake of reducing the number of notations, it is assumed here that the same $\alpha$ is used of each cat-qubit, whatever the gate. However, the following specifications can be straightforwardly adapted to cat-qubit of different sizes; in such a case, each of the n cat-qubits has a respective size $\alpha_q$.

The ZZ-gate and the ZZZ-gate are implemented through the quantum Zeno effect, by using a weak Hamiltonian that triggers the accumulation of the desired "dynamical phase" in the cat-qubit subspace. Here, the bias-preserving property is ensured by the fact that phase-flips commutes with the continuous process implementing the gate, and by the fact that the two-photon dissipation is always turned on.

The ZZ($\theta$)-gate and the ZZZ($\theta$)-gate are both the rotation of an arbitrary angle $\theta$ about the Z axis of the Bloch sphere of the cat-qubits involved in the gate. In order to describe those gates, a rotation about the Z axis of a single cat-qubit is firstly studied. A rotation about the Z axis of a cat-qubit can be written as :

$$Z(\theta) = e^{-i\frac{\theta}{2}Z_\alpha} = cos\frac{\theta}{2}I_\alpha - isin\frac{\theta}{2}Z_\alpha$$

where: $I_\alpha$ and $Z_\alpha$ are the Pauli operators which act on the cat-qubit defined by $\alpha$. Those Pauli operators can be expressed as:

$$I_\alpha = |C_{\alpha+}\rangle\langle C_{\alpha+}| + |C_{\alpha-}\rangle\langle C_{\alpha-}|$$

$$Z_\alpha = |C_{\alpha+}\rangle\langle C_{\alpha-}| + |C_{\alpha-}\rangle\langle C_{\alpha+}|$$

In the following, the subscript $\alpha$ is dropped and the operators applied to the cat-qubits are simply written using the usual qubit notations. The Z($\theta$)-gate is implemented by applying a weak resonant drive described by the following Hamiltonian in the rotating frame of the cavity mode:

where: $\varepsilon_Z$ is the amplitude of the drive Hamiltonian.

In the following, $\varepsilon_Z$ is considered as real even if it can be complex. In such case, the Hamiltonian writes :

$$H_Z = \epsilon_Z a + \epsilon_Z^* a^\dagger$$

where: $\epsilon_Z^*$ is the complex conjugate of $\varepsilon_Z$.

This Hamiltonian is applied on the quantum entities in the presence of the nominal dynamics. In such a case, the two-photon driven dissipation modelled by the Lindblad super-operator $k_2 D_{a2-\alpha2}$, with $|\varepsilon_Z|$ small with respect to $\kappa_2$. The combination of these two dynamics implements the gate as follows. The fast two-photon driven-dissipative part of the dynamics confines the state in the cat-qubit manifold, while the one-photon drive induces a change of the photon number parity. If the cat-qubit is initialized in the state $|C_{\alpha+}\rangle$ - having an even photon number parity -, the effect of the weak drive is to induce Rabi oscillations between the even cat $|C_\alpha^+\rangle$ and the odd cat $|C_\alpha^-\rangle$. The rate of these Rabi oscillations is set by the first order perturbation induced by the Hamiltonian, given by the projection of the Hamiltonian on the cat-qubit subspace :

$$I_\alpha H_z I_\alpha = 2\mathrm{Re}(\alpha\epsilon_Z)Z_\alpha + O(e^{-2|\alpha|^2})$$

where: $\mathrm{Re}(\cdot)$ denotes the real part.

For $\alpha$ and $\varepsilon_Z$ real:

$$I_\alpha H_z I_\alpha = 2\alpha\epsilon_Z Z_\alpha + O(e^{-2|\alpha|^2})$$

The fact that the effective dynamics, up to the first order in the small parameter $\varepsilon_Z/\kappa_2$, is given by the projection of the perturbative Hamiltonian is the well-known quantum Zeno effect.

In the context of the Z-gate, the rotation of an angle $\theta$ is obtained by applying the weak drive during a time:

$$T = \frac{\theta}{4\alpha\epsilon_Z}$$

The same recipe can be readily applied to construct the two-qubit entangling gate ZZ($\theta$).

The Pauli operators $I_\alpha$ and $Z_\alpha$ acting on the first cat-qubit (respectively second cat-qubit) are denoted $I_1$ and $Z_1$ (respectively $I_2$ and $Z_2$) hereinafter.

$$Z_1 Z_2(\theta) = e^{-i\frac{\theta}{2}Z_1 Z_2} = \cos\frac{\theta}{2}I_1 I_2 - i\sin\frac{\theta}{2}Z_1 Z_2$$

As for the Z-gate described above, the ZZ-gate is realized by applying a weak beam-splitter Hamiltonian $H_{ZZ}$ written as follows:

$$H_{ZZ} = \epsilon_{Z_1 Z_2} a_1 a_2^\dagger + \epsilon_{Z_1 Z_2}^* a_1^\dagger a_2$$

where: $\varepsilon_{Z_1 Z_2}$ is the amplitude of the Hamiltonian, $a_1$ (respectively $a_2$) is the annihilation operator of the first (respectively second) cat-qubit.

This weak beam-splitter Hamiltonian is applied in the presence of the two-photon driven dissipation on both of the cat qubits.

Taking $\varepsilon_{Z_1 Z_2}$ to be real, the projection of Hzz on the two cat-qubit subspaces gives the oscillation rate $\Omega_{Z_1 Z_2} = 2|\alpha|^2\varepsilon_{Z_1 Z_2}$, such that the rotation $Z_1 Z_2(\theta)$ is obtained upon the application of the weak Hamiltonian during the following time T:

$$T = \frac{\theta}{4|\alpha|^2 \epsilon_{Z_1 Z_2}}$$

We will show the agreement of this new simulation technique in the Heisenberg picture with the previous one in the Schrodinger picture by producing quantum process tomographies via the $\chi$ matrix representation, which is a complete characterisation of a quantum channel.

The $\chi$ matrix of the ZZ-gate are obtained by applying the propagator on a set of 16 initial density matrices $\{\rho_i\}_{1 \leq i \leq 16}$. The processor 5 thus computes their final states $\{\rho_{f,i}\}_{1 \leq i \leq 16}$ and builds the $\chi$ matrix from them according to the following formula :

$$\varepsilon(\rho) = \sum_{m,n} \chi_{m,n} S_m \rho S_n$$

where: the operators $S_m$ denote the Pauli matrices $\{I, X, Y, Z\}^2$ which form a basis of the two two-level qubits density matrices.

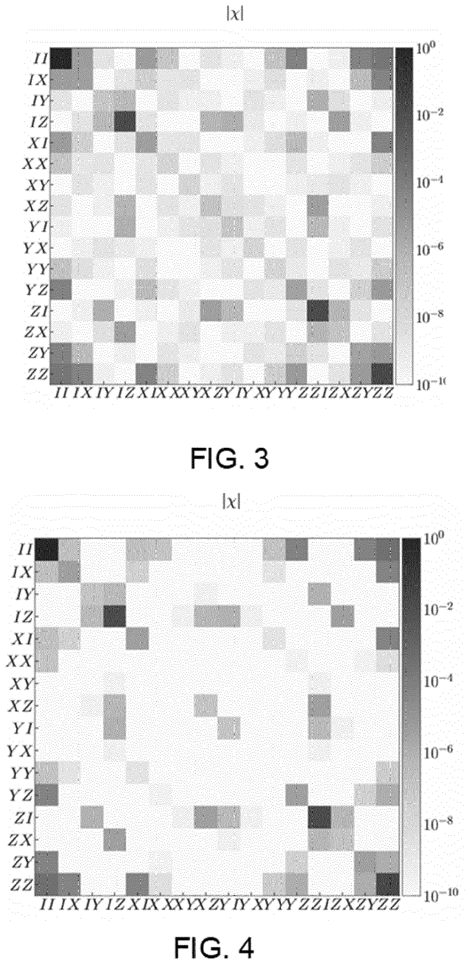

FIG. 3 shows the modulus of the $\chi$ matrix obtained after simulating the $\{\rho_i\}_{1 \leq i \leq 16}$ using the Schrödinger picture for $|\alpha|^2 = 4$, a one-photon loss amplitude of $\kappa_1 = 10^{-3}$, a Hamiltonian amplitude of $\varepsilon_{ZZ} = 5 \times 10^{-2}$, $\theta = \pi$ and a truncature of 41, meaning that the first 41 Fock states were used in the simulation per cat-qubit to described the infinite-dimensional Hilbert space, as described above.

FIG. 4 shows the modulus of the $\chi$ matrix obtained after simulating the $\{\rho_i\}_{1 \leq i \leq 16}$ using the proposed simulation method in the Heisenberg picture for the same parameters $|\alpha|^2 = 4$, a one-photon loss amplitude of $\kappa_1 = 10^{-3}$ and a Hamiltonian amplitude of $\varepsilon_{ZZ} = 5 \times 10^{-2}$, but a truncature of 100 per cat-qubit.

The comparison of both figures shows that the proposed simulation method succeeds in computing correctly the final states of density matrices for this set of experimental parameters.

The simulation takes about 160 hours with the Schrödinger picture versus only 5 minutes with the proposed simulation method in the Heisenberg picture.

To make the comparison more thorough, the same comparison is carried out for a mean photon number $|\alpha|^2$ ranging from 1 to 16 and the particular coefficients of the $\chi$ matrix are displayed.

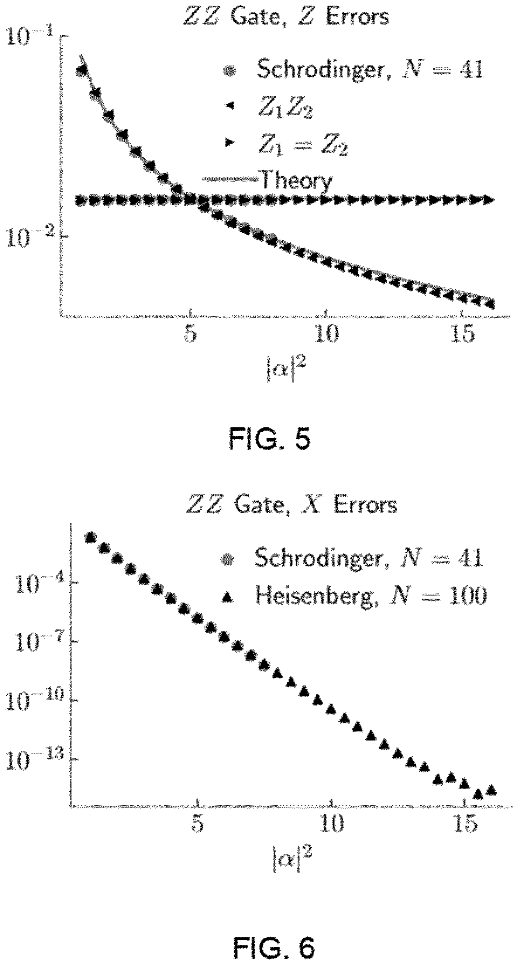

FIG. 5 shows the different phase-flip error probabilities: the evolution of the coefficient $\chi_{(Z_1 Z_2, Z_1 Z_2)}$ represented by black triangles pointing to the left and decreasing with the mean photon number $|\alpha|^2$, and $\chi_{(Z_1, Z_1)}$ and $\chi_{(Z_2, Z_2)}$ represented by black triangles pointing to the right and constant with the mean photon number $|\alpha|^2$ using the proposed simulation method.

The same coefficients computed with the Schrödinger picture are show as grey circles slightly below the black triangles.

The analytical formula for the $Z_1$, $Z_2$ and $Z_1 Z_2$ errors obtained via second-order adiabatic elimination are shown as grey lines.

$$p_{Z_1} = p_{Z_2} = |\alpha|^2 \kappa_1 T$$

$$p_{Z_1 Z_2} = \frac{\pi^2}{8|\alpha|^2 \kappa_2 T}$$

The Schrödinger picture would require higher truncatures to go above 8 photons and is thus not simulated here.

FIG. 6 shows the evolution of the sum of the coefficients of $\chi$ that include bitflips : one or more of the errors $X_1$, $Y_1$, $X_2$ and $Y_2$. Those errors are represented as black triangles pointing upward and exponentially decreasing with the mean photon number $|\alpha|^2$. The same coefficients computed with the Schrödinger picture are shown as grey circles below the black triangles.

In this figure, one verifies the exponential suppression of bitflips which is known to be hard in numerical simulations.

Finally, one considers the ZZZ-gate hereinafter. From a theoretical point of view, the above Zeno mechanism can be generalized to construct arbitrary rotations on n qubits. For instance, the three-qubit entangling gate ZZZ($\theta$) can be generated, for instance by using the weak Hamiltonian between three cat-qubits:

$$H_{ZZZ} = \epsilon_{Z_1 Z_2 Z_3} a_1 a_2 a_3 \dagger + hc$$

where: $\varepsilon_{Z_1 Z_2 Z_3}$ is the amplitude of the Hamiltonian, $a_1$ (respectively $a_2$ and $a_3$) is the annihilation operator of the first (respectively second and third) cat-qubit.

This weak beam-splitter Hamiltonian is applied in the presence of the two-photon driven dissipation on both of the cat-qubits.

The rotation $Z_1 Z_2 Z_3(\theta)$ is obtained upon the application of the weak Hamiltonian during the following time:

$$T = \frac{\theta}{4|\alpha|^3 \epsilon_{Z_1 Z_2 Z_3}}$$

The $\chi$ matrices of the ZZZ-gate are obtained by applying the propagator on a set of 64 initial density matrices $\{\rho_i\}_{1 \leq i \leq 64}$. The processor 5 thus computes their final states $\{\rho_{f,i}\}_{1 \leq i \leq 64}$ and builds the $\chi$ matrix from them according to the following formula :

$$\varepsilon(\rho) = \sum_{m,n} \chi_{m,n} S_m \rho S_n$$

where: the operators $S_m$ denote the Pauli matrices $\{I, X, Y, Z\}^3$ which form a basis of the three two-level qubits density matrices.

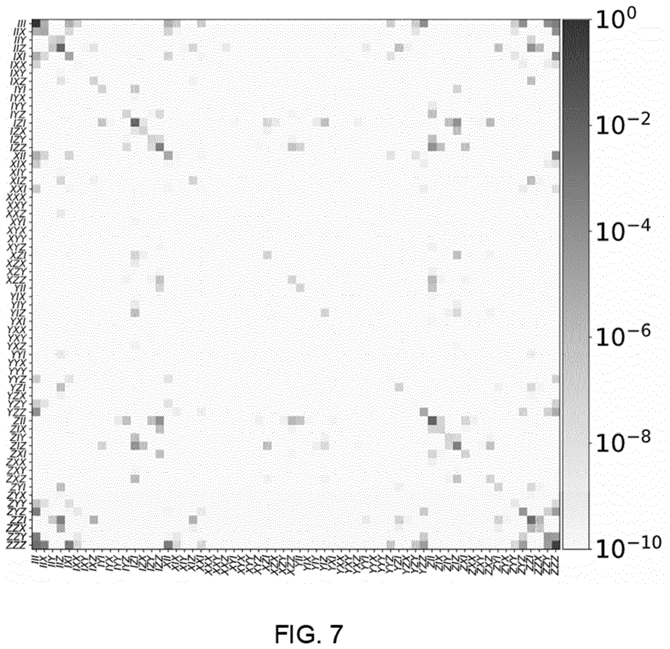

FIG. 7 shows the modulus of the $\chi$ matrix obtained after simulating the $\{\rho_i\}$ using the proposed simulation method in the Heisenberg picture for the same parameters $|\alpha|^2 = 4$, a one-photon loss of $\kappa_1 = 10^{-3}$, a Hamiltonian amplitude of $\varepsilon_{ZZZ} = 5 \times 10^{-2}$ and $\theta = \pi$, but a truncature of 100 per cat-qubit.

Here the size of the full Hilbert space composed of the three cat-qubits is too big to allow for a simulation in the Schrödinger picture.

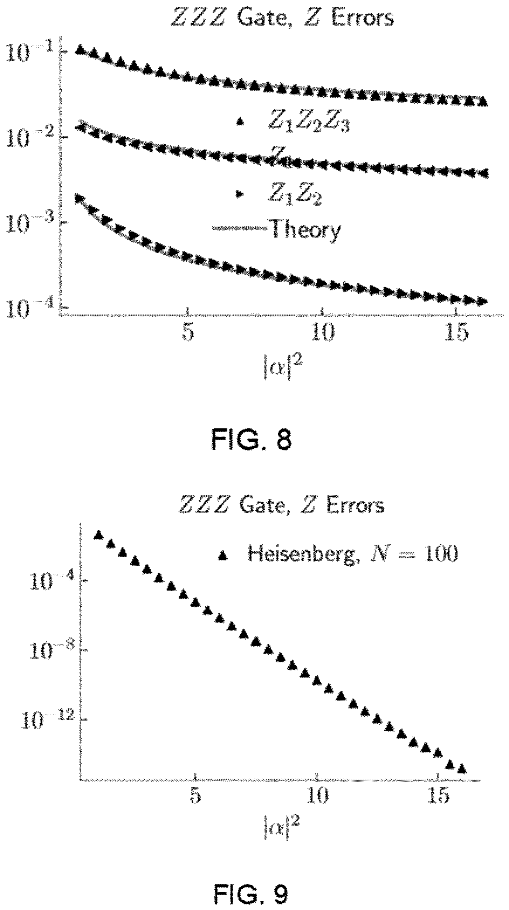

FIG. 8 shows the evolution of the coefficient $\chi_{(Z_1 Z_2 Z_3, Z_1 Z_2 Z_3)}$ represented by black triangles pointing upward, $\chi_{(Z_1 Z_2, Z_1 Z_2)}$ and $\chi_{(Z_1 Z_3, Z_1 Z_3)}$ and $\chi_{(Z_2 Z_3, Z_2 Z_3)}$ represented by black triangles pointing to the right, and $\chi_{(Z_1, Z_1)}$ and $\chi_{(Z_2, Z_2)}$ and $\chi_{(Z_3, Z_3)}$ represented by black triangles pointing to the left for the proposed simulation method.

The same coefficients with the Schrödinger picture cannot be computed in a reasonable time.

The analytical formula for the $Z_1$, $Z_2$, $Z_3$ and $Z_1 Z_2$, $Z_1 Z_3$, $Z_2 Z_3$ and $Z_1 Z_2 Z_3$ errors obtained via second-order adiabatic elimination are shown as grey lines and show very good agreement.

$$p_{Z_1} = p_{Z_2} = p_{Z_3} = \alpha^2 \kappa_1 T$$

$$p_{Z_1 Z_2 Z_3} = \frac{3\pi \epsilon_{Z_1 Z_2 Z_3}}{4\alpha \kappa_2}$$

$$p_{Z_1 Z_2} = p_{Z_2 Z_3} = p_{Z_1} p_{Z_1 Z_2 Z_3} = p_{Z_2} p_{Z_1 Z_2 Z_3} = p_{Z_3} p_{Z_1 Z_2 Z_3} = \frac{3\pi^2 \kappa_1}{16\alpha^2 \kappa_2}$$

FIG. 9 shows the evolution of the sum of the coefficients of $\chi$ that include bitflips : one or more of the errors $X_1$, $Y_1$, $X_2$, $Y_2$, $X_3$, $Y_3$. Those errors are represented as black triangles pointing upward and exponentially decreasing with the mean photon number $|\alpha|^2$.

In this figure, one verifies the exponential suppression of bitflips which is known to be hard in numerical simulations up to 16 photons, which correspond to a total bitflip error probability of $10^{-16}$.

Referring to FIG. 10, the case in which the open quantum system comprises a single quantum entity is now considered. This case allows both to understand the mechanisms of the previous formulas and to highlight that it is possible to push the approximation of the function F to an arbitrary order to simulate an open quantum system including a single quantum entity.

In the following equations and demonstrations, the notation q, which previously allowed to indicate the quantum entities of the open quantum system, are absent since only one quantum entity is present.

We are looking for a time-discrete expression of the density operator $\rho$ satisfying the following equation:

$$\rho_{k+1} = K_0(\rho_k) + K_1(\rho_k)$$

To do this, a solution in the following asymptotic form is sought:

$$\rho_k = \sum_{d=1}^{d_0} x_{d,k} \left( \sum_{r=0}^{Q} S_d^r \right)$$

with:

$$X_{k+1} = \left( \sum_{r=0}^{Q} F^r \right) X_k$$

where: - $d_0$ is the dimension of the decoherence-free space $D_0$ of the open quantum system,

- $S_d^r$ are Hermitian trace-class operators,

- $\sum_{r=0}^{Q} F^r$ is a Q-order approximation of the matrix F, Q being an integer greater than or equal to two, and

- $X_{k+1} = (x_{1,k}, ..., x_{d_0,k})^T$ is the coordinate vector of the quantum entity in the decoherence-free space.

The r-order parts $F^r$ as well as the Hermitian trace-class operators are determined by a recurrence process on r, recalling that the zero-order part $F^0$ is already known and corresponds to the identity matrix and that the Hermitian trace-class operators $S_d^0$ are also known since they form the orthonormal Hermitian basis of the decoherence-free space $D_0$.

More specifically, the recurrence process is implemented by identifying terms of the same order in an invariance equation characterizing the slow dynamics close to $D_0$ induced by the perturbation portion $K_1$.

$$\rho_{k+1} = \sum_{d=1}^{d_0} x_{d,k+1} \left( \sum_{r=0}^{Q} S_d^r \right)$$

$$x_{d,k+1} = \sum_{d'=1}^{d_0} \left( \sum_{r=0}^{Q} F_{d,d'}^r \right) x_{d',k}$$

Thus:

$$\rho_{k+1} = \sum_{d=1}^{d_0} \sum_{d'=1}^{d_0} \left( \sum_{r=0}^{Q} F_{d,d'}^{r} \right) x_{d',k} \left( \sum_{r=0}^{Q} S_{d}^{r} \right)$$

$$\rho_{k+1} = \sum_{d=1}^{d_0} \sum_{d'=1}^{d_0} \left( (F_{d',d}^{0} + F_{d',d}^{1} + \cdots + F_{d',d}^{Q}) x_{d',k} (S_{d}^{0} + S_{d}^{1} + \cdots + S_{d}^{Q}) \right)$$

The k+1-th time value $\rho_{k+1}$ of the time-discrete density operator can also be written as follows:

$$\rho_{k+1} = (K_0 + K_1)(\rho_k)$$

Thus:

$$\rho_{k+1} = (K_0 + K_1)\left( \sum_{d=1}^{d_0} x_{d,k} \left( \sum_{r=0}^{Q} S_{d}^{r} \right) \right)$$

$$\rho_{k+1} = (K_0 + K_1)\left( \sum_{d=1}^{d_0} x_{d,k} (S_{d}^{0} + S_{d}^{1} + \cdots + S_{d}^{Q}) \right)$$

Since the variable $x_{d,k}$ are arbitrary, it follows that:

$$\sum_{d'=1}^{d_0} \left( (F_{d',d}^{0} + F_{d',d}^{1} + \cdots + F_{d',d}^{Q}) (S_{d}^{0} + S_{d}^{1} + \cdots + S_{d}^{Q}) \right) = (K_0 + K_1)(S_{d}^{0} + S_{d}^{1} + \cdots + S_{d}^{Q})$$

The 0-order equations are satisfied since: $K_0(S_{d}^{0}) = S_{d}^{0}$ and $F_{d',d}^{0} = \delta_{d',d}$

The r-order equations are:

$$\sum_{s=0}^{r} \sum_{d'=1}^{d_0} F_{d',d}^{s} S_{d'}^{r-s} = K_0(S_{d}^{r}) + K_1(S_{d}^{r-1})$$

We then apply the invariant operator $J_{d''}$ and the trace :

$$\sum_{s=0}^{r} \sum_{d'=1}^{d_0} F_{d',d}^{s} Tr(J_{d''} S_{d'}^{r-s}) = Tr(J_{d''} K_0(S_{d}^{r})) + Tr(J_{d''} K_1(S_{d}^{r-1}))$$

Thus, by bringing out the sums for s=0 and s=r:

$$\sum_{d'=1}^{d_0} F_{d',d}^0 \, Tr\big(J_{d''}S_{d'}^r\big) + \sum_{d'=1}^{d_0} F_{d',d}^r \, Tr\big(J_{d''}S_{d'}^0\big)$$

$$+ \sum_{s=1}^{r-1}\sum_{d'=1}^{d_0} F_{d',d}^s \, Tr\big(J_{d''}S_{d'}^{r-s}\big) = Tr\big(J_{d''}K_0(S_d^r)\big) + Tr\big(J_{d''}K_1(S_d^{r-1})\big)$$

We have:

$$F_{d',d}^0 = \delta_{d',d} \text{ and } Tr\big(J_{d''}S_{d'}^0\big) = \delta_{d'',d'}.$$

Thus:

$$\sum_{d'=1}^{d_0} F_{d',d}^0 \, Tr\big(J_{d''}S_{d'}^r\big) + \sum_{d'=1}^{d_0} F_{d',d}^r \, Tr\big(J_{d''}S_{d'}^0\big) = Tr\big(J_{d''}S_d^r\big) + F_{d'',d}^r$$

In addition:

$$Tr\big(J_{d''}K_0(S_d^r)\big) = Tr\big(J_{d''}S_d^r\big)$$

Thus:

$$F_{d'',d}^r + \sum_{s=1}^{r-1}\sum_{d'=1}^{d_0} F_{d',d}^s \, Tr\big(J_{d''}S_{d'}^{r-s}\big) = Tr\big(J_{d''}K_1(S_d^{r-1})\big)$$

Consequently, each Hermitian trace-class operator $S_d^r$ is the solution of the following equation with unknown Hermitian operator S:

$$S = K_0(S) + W_d^r$$

with:

$$W_d^r = K_1(S_d^{r-1}) - \sum_{s=1}^{r}\sum_{d'=1}^{d_0} F_{d',d}^s \, S_{d'}^{r-s}$$

Here, $W_d^r$ is orthogonal to the kernel of $K_0^* - I$ spanned by $\{J_d, d \in [\![1, d_0]\!]\}$ and thus belongs to the range of $K_0$ - $I$. Here $I$ stands for the identity map: $I(S) \equiv S$. A particular solution $S_d^r$ is given by the following limit:

$$S_d^r = \lim_{i \to +\infty} [K_0 + W_d^r]^i(0)$$

All other solutions S differ from $S_d^r$ via operators in the decoherence-free space $D_0$. Moreover, $S_d^r$ is the unique solution satisfying $Tr(J_{d'} S_d^r) = 0$ for all d'. As a consequence:

$$F_{d',d}^r = Tr(J_{d'} K_1(S_d^{r-1}))$$

In view of the foregoing, the simulation method previously described with reference to FIG. 2 can be improved in the case of an open quantum system including a single quantum entity. Specifically, the operation 250 can be extended to a desired Q order to obtain a more accurate matrix F and thus a more accurate propagator P as well. In FIG. 10, the recurrence process starts at order r and the matrix F is initialized with the zero-order part since $F^0$ corresponds to the identity matrix I. Moreover, the device 1 can further receive a desired Q order for the approximation of the matrix F.

In an operation 300, the processor 5 calculates the coefficients $F_{d',d}^r$ for each couple $(d', d) \in [\![1, d_0]\!]^2$ based on the preceding formula. The r-order part $F^r$ of the matrix F is then determined and the matrix F can be updated.

In an operation 310, the processor 5 calculates $W_d^r$.

In an operation 320, the processor 5 calculates the Hermitian trace-class operator $S_d^r$.

In an operation 330, The processor 5 determines if the Q order has been reached, i.e. whether the Q-order part of the matrix F has already been determined. If not, the value of r is incremented in an operation 340 and the previous operations 300, 310 and 320 are implemented again for the next order. If the order Q has been reached, the process of FIG. 10 stops and the matrix F is outputted.

The previous reasoning can be applied in the case of an open quantum system comprising a plurality of quantum entities and allows to demonstrate the formulas of operation 250 to compute the zero-order part $F^0$ and the first-order part $F^1$ of the matrix F.

Proof elements are provided hereinafter. To avoid cumbersome notations, we simply consider here the case of an open quantum system including two quantum entities A and B.

For the first-order part $F^1$, i.e. r=1, the formula $F_{d',d}^r = Tr(J_{d'} K_1(S_d^{r-1}))$ provides:

$$F_{(d_A', d_B'), (d_A, d_B)}^1 = Tr(J_{d_A'} \otimes J_{d_B'} K_1(S_{A,d_A}^0 \otimes S_{B,d_B}^0))$$

Thus:

$$F_{(d_A', d_B'), (d_A, d_B)}^1 = \sum_\mu Tr(R_{A,\mu}^1 J_{d_A'} L_{A,\mu}^1 S_{A,d_A}^0) Tr(R_{B,\mu}^1 J_{d_B'} L_{B,\mu}^1 S_{B,d_B}^0)$$

$$F_{(d_A', d_B'), (d_A, d_B)}^1 = Tr(K_1^*(J_{d_A'} \otimes J_{d_B'}) S_{A,d_A}^0 \otimes S_{B,d_B}^0)$$

We can denote:

$$J_{\mu, A, d_A'}^1 = R_{A,\mu}^1 J_{d_A'} L_{A,\mu}^1$$

$$J^1_{\mu,B,d'_B} = R^1_{B,\mu} J_{d'_B} L^1_{B,\mu}$$

Consequently:

$$K_1^*(J_{d'_A} \otimes J_{d'_B}) = \sum_\mu J^1_{\mu,A,d'_A} \otimes J^1_{\mu,B,d'_B}$$

Thus:

$$F^1_{(d'_A,d'_B),(d_A,d_B)} = \sum_\mu Tr(J^1_{\mu,A,d'_A} S^0_{A,d_A}) Tr(J^1_{\mu,B,d'_B} S^0_{B,d_B})$$

$$F^1_{(d'_A,d'_B),(d_A,d_B)} = \sum_\mu F^1_{\mu,A,(d'_A,d_A)} F^1_{\mu,B,(d'_B,d_B)}$$

with: $F^1_{\mu,A,(d'_A,d_A)} = Tr(J^1_{\mu,A,d'_A} S^0_{A,d_A})$ and $F^1_{\mu,B,(d'_B,d_B)} = Tr(J^1_{\mu,B,d'_B} S^0_{B,d_B})$

For the second-order part F², i.e. r=2, the formula $F^r_{d',d} = Tr(J_{d'} K_1(S^{r-1}_d))$ provides:

$$F^2_{(d'_A,d'_B),(d_A,d_B)} = Tr(J_{d'_A} \otimes J_{d'_B} K_1(S^1_{(d_A,d_B)}))$$

where: $S^1_{(d_A,d_B)}$ is the solution of the equivalent of the above-mentioned equation $S = K_0(S) + W^r_d$ and is in general an infinite converging sum of tensor products:

$$S^1_{(d_A,d_B)} = \sum_{i=0}^{+\infty} [K_0]^i (W^1_{(d_A,d_B)})$$

where: $W^1_{(d_A,d_B)} = K_1(S^0_{A,d_A} \otimes S^0_{B,d_B}) - \sum_{d'_A,d'_B} F^1_{(d'_A,d'_B),(d_A,d_B)} S^0_{A,d_A} \otimes S^0_{B,d_B}$ is a finite sum of tensor products:

$$W^1_{(d_A,d_B)} = \sum_\mu L^1_{A,\mu} S^0_{A,d_A} R^1_{A,\mu} \otimes L^1_{B,\mu} S^0_{B,d_B} R^1_{B,\mu} - \sum_{d'_A,d'_B} F^1_{(d'_A,d'_B),(d_A,d_B)} S^0_{A,d'_A} \otimes S^0_{B,d'_B}$$

Since $Tr(J_{A,d_A} \otimes J_{B,d_B} W^1_{(d_A,d_B)}) = 0$ for any invariant $J_{A,d_A} \otimes J_{B,d_B}$, the iterates $[K_0]^i(W^1_{(d_A,d_B)})$ converges exponentially to 0. The above series of operators is absolutely convergent and we have:

$$F^2_{(d'_A,d'_B),(d_A,d_B)} = \sum_{i=0}^{+\infty} Tr\left(\left(K_1^* \left(J_{A,d'_A} \otimes J_{B,d'_B}\right) [K_0]^i \left(W^1_{(d_A,d_B)}\right)\right)\right)$$

We can denote:

$$S^1_{\mu,A,d_A} = L^1_{A,\mu} S^0_{A,d_A} R^1_{A,\mu}$$

$$S^{1,0}_{\mu,A,d_A} = \sum_{d'_A} F^1_{\mu,A,(d'_A,d_A)} S^0_{A,d'_A}$$

$$S^1_{\mu,B,d_B} = L^1_{B,\mu} S^0_{B,d_B} R^1_{B,\mu}$$

$$S^{1,0}_{\mu,B,d_B} = \sum_{d'_B} F^1_{\mu,B,(d'_B,d_B)} S^0_{B,d'_B}$$

Thus, one gets:

$$W^1_{(d_A,d_B)} = \sum_{\mu} S^1_{\mu,A,d_A} \otimes S^1_{\mu,B,d_B} - S^{1,0}_{\mu,A,d_A} \otimes S^{1,0}_{\mu,B,d_B}$$

Finally, some computations give then:

$$F^2_{(d'_A,d'_B),(d_A,d_B)}$$

$$= \sum_{i=0}^{+\infty} \left(\sum_{\mu,\mu'} Tr\left(J^1_{\mu',A,d'_A} [K_{0,A}]^i \left(S^1_{\mu,A,d_A}\right)\right) Tr\left(J^1_{\mu',B,d'_B} [K_{0,B}]^i \left(S^1_{\mu,B,d_B}\right)\right)\right.$$

$$\left. - \left(\sum_{d''_A} F^1_{\mu',A,d'_A,d''_A} F^1_{\mu,A,d''_A,d_A}\right) \left(\sum_{d''_B} F^1_{\mu',B,d'_B,d''_B} F^1_{\mu,B,d''_B,d_B}\right)\right)$$

Just as it is possible, as previously discussed, to simulate a quantum logic gate for two or more qubits, it is also possible to simulate a quantum logic gate for a single qubit, for instance a Z-gate.

As previously mentioned, the Z-gate is one of the Pauli gates and corresponds to a rotation by $\pi$ radians around the Z axis of the Bloch sphere. The Z-gate leaves the basis state $|0\rangle$ unchanged and converts the basis state $|1\rangle$ to $-|1\rangle$. The Z-gate is usually represented by the following square matrix Z:

$$Z = \begin{bmatrix} 1 & 0 \\ 0 & -1 \end{bmatrix}$$

As previously explained, a rotation about the Z axis of a cat-qubit can be written as :

$$Z(\theta) = e^{-i\frac{\theta}{2}Z_\alpha} = \cos\frac{\theta}{2} I_\alpha - i\sin\frac{\theta}{2} Z_\alpha$$

In addition, in the context of the Z-gate, the rotation of an angle θ is obtained by applying the weak drive during a time:

$$T = \frac{\theta}{4\alpha\epsilon_Z}$$

The χ matrix of the Z-gate are obtained by applying the propagator on a set of 4 initial density matrices $\{\rho_i\}_{1\leq i\leq 4}$. The processor 5 thus computes their final states $\{\rho_{f,i}\}_{1\leq i\leq 4}$ and builds the χ matrix from them according to the following formula :

$$\varepsilon(\rho) = \sum_{m,n} \chi_{m,n} S_m \rho S_n$$

where: the operators $S_m$ denote the Pauli matrices {I, X, Y, Z} which form a basis of the two-level qubit density matrices.

FIG. 11 shows on the left the modulus of the real part of the χ matrix and shows on the right the modulus of the imaginary part of the χ matrix obtained after simulating the $\{\rho_i\}$ using the Schrödinger picture for $|\alpha|^2$ = 4, a one-photon loss amplitude of $\kappa_1$ = $10^{-3}$, a Hamiltonian amplitude of $\varepsilon_Z$ = 5 × $10^{-2}$ and a truncature of 100, which means that the first 100 Fock states are used in the simulation per cat-qubit to described the infinite-dimensional Hilbert space, as described above.

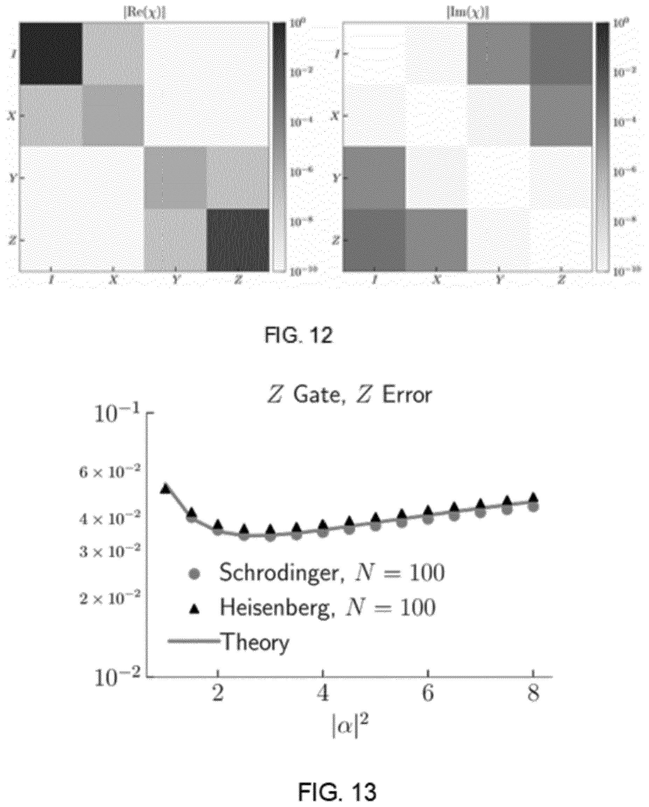

FIG. 12 shows on the left the modulus of the real part of the χ matrix and shows on the right the modulus of the imaginary part of the χ matrix obtained after simulating the $\{\rho_i\}$ using the proposed simulation method in the Heisenberg picture, for the same parameters $|\alpha|^2$ = 4, a one-photon loss amplitude of $\kappa_1$ = $10^{-3}$ and a Hamiltonian amplitude of $\varepsilon_Z$ = 5 × $10^{-2}$, but a truncature of 100 per cat-qubit.

The comparison of the both figures shows that the proposed simulation method succeeds in computing correctly the final states of density matrices for this set of experimental parameters.

To make the comparison more thorough, the same comparison is carried out for a mean photon number $|\alpha|^2$ ranging from 1 to 8 and the particular coefficients of the χ matrix are displayed.

FIG. 13 shows the evolution of the coefficient $\chi_{(Z,Z)}$ represented by black triangles pointing upward with the mean photon number $|\alpha|^2$ using the proposed simulation method.

The same coefficients computed with the Schrödinger picture are show as grey circles below the black triangles.

The analytical formula for the Z errors obtained via second-order adiabatic elimination are shown as a grey line.

$$p_Z = \frac{\epsilon_Z^2 T}{|\alpha|^2 \kappa_2} + |\alpha|^2 \kappa_1 T$$

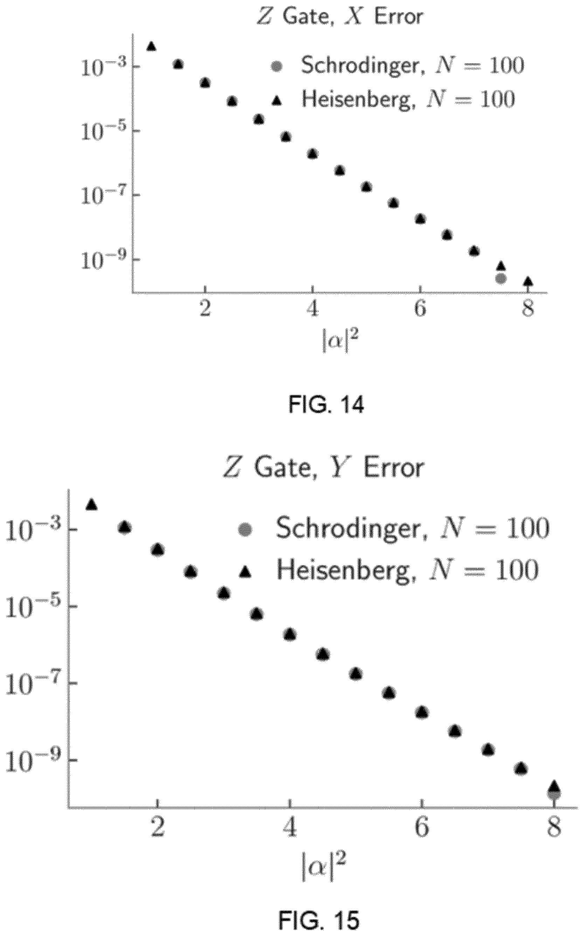

FIG. 14 and FIG. 15 show respectively the evolution of the coefficient $\chi_{(X,X)}$ responsible of X errors and the evolution of the coefficient $\chi_{(Y,Y)}$ responsible of Y errors. Those errors are represented as black triangles pointing upward and exponentially decreasing with the mean photon number $|\alpha|^2$. The same coefficients computed with the Schrödinger picture are show as grey circles below the black triangles.

In this figure, one verifies the exponential suppression of bitflips which is known to be hard in numerical simulations.

## Claims

1. A device (1) for simulating an open quantum system including one or more quantum entities, the open quantum system having a Hilbert space H and the one or more quantum entities each having a respective Hilbert space $H_q$,

   such that $H = \bigotimes_{q=1}^{n} H_q$ , where n is the number of quantum entities and ⊗ denotes the tensor product,

   the one or more quantum entities each having a respective decoherence-free space $D_{0,q}$ which are exponential attractors and define together a decoherence-free space $D_0$ of the open quantum system with

$D_0 = \bigotimes_{q=1}^{n} D_{0,q}$ , each decoherence-free space $D_{0,q}$ having a respective orthonormal Hermitian basis $\left\{ S_{q,d_q}^0, d_q \in [\![1, d_{0,q}]\!] \right\}$ , where $S_{q,d_q}^0$ is the $d_q$-th Hermitian of the orthonormal Hermitian basis of the decoherence-free space $D_{0,q}$ of the q-th quantum entity and $d_{0,q}$ is the dimension of the decoherence-free space $D_{0,q}$ of the q-th quantum entity,
said device (1) comprising:

a memory (3) arranged to store data representing the time evolution of a Lindblad master equation defining the dynamics of a density operator ρ of the open quantum system, said dynamics including at least a sum of quantum entity specific local nominal dynamics, and
a processor (5) arranged to apply an explicit method to said data for generating a discrete-time expression of the Lindblad master equation, splitting said discrete-time expression of the Lindblad master equation into a local nominal dynamics portion and a perturbation portion $K_1$ with an amplitude of said perturbation portion being at least five times smaller than an amplitude of said local nominal dynamics portion, and to further apply a trace-preserving and completely-positive linear Kraus map formulation to said local nominal dynamics portion such that the Kraus map $K_0$ of said local nominal dynamics portion is derived from the respective Kraus maps $K_{0,q}$ of said quantum entity specific local nominal dynamics with $K_0 = \bigotimes_{q=1}^{n} K_{0,q}$ , such that $\rho_{k+1} = K_0(\rho_k) + K_1(\rho_k)$, where $\rho_k$ is the k-th time value of the time-discrete density operator,

said processor (5) being further arranged to determine a finite set of local operators $L_{q,\mu}^1$ and $R_{q,\mu}^1$ on

the Hilbert space $H_q$ such that, for any operator W on the Hilbert space H verifying $W = \bigotimes_{q=1}^{n} W_q$ , $W_q$

being a local operator on the Hilbert space $H_q$: $K_1(W) = \Sigma_\mu \bigotimes_{q=1}^{n} L_{q,\mu}^1 W_q R_{q,\mu}^1$ ,

said processor (5) being further arranged to calculate invariant operators $J_{q,dq}$ = $\lim\limits_{k \to +\infty} \left[ K_{0,q}^* \right]^k (S_{q,d_q}^0)$

of each quantum entity, where $K_{0,q}^*$ is the conjugate transpose of the local nominal dynamics portion $K_{0,q}$ of the q-th quantum entity,
said processor (5) being further arranged to determine a second-order approximation of matrices F(k) modeling the time evolution of the time-discrete density operator of the open quantum system by computing:

$$F^0(k) = I$$

$$F_{(d_1', \ldots, d_n'),(d_1, \ldots, d_n)}^1(k) = \sum_{\mu} \prod_{q=1}^{n} Tr(J_{\mu,q,d_q'}^1(k) S_{q,d_q}^0)$$

$$F_{(d_1', \ldots, d_n'),(d_1, \ldots, d_n)}^2(k)$$

$$= \sum_{i=0}^{+\infty} \left( \sum_{\mu,\mu'} \prod_{q=1}^{n} Tr\left( J_{\mu',q,d_q'}^1(k) \left[ K_{0,q} \right]^i \left( S_{\mu,q,d_q}^1(k) \right) \right) \right.$$

$$\left. - \prod_{q=1}^{n} \sum_{d_q''} Tr(J_{\mu',q,d_q'}^1(k) S_{q,d_q''}^0) Tr(J_{\mu,q,d_q''}^1(k) S_{q,d_q}^0) \right)$$

with:

$$J^1_{\mu,q,d'_q}(k) = R^1_{q,\mu}(k)J_{q,d'_q}L^1_{q,\mu}(k)$$

$$S^1_{\mu,q,d_q}(k) = L^1_{q,\mu}(k)S^0_{q,d_q}R^1_{q,d_q}(k)$$

where : I is the identity matrix on the Hilbert space H, $F^0(k)$ is a zero-order part of the matrix F(k),

$F^1_{(d'_1,...,d'_n),(d_1,...,d_n)}(k)$ is a coefficient of a first-order part $F^1(k)$ of the matrix F(k),

$F^2_{(d'_1,...,d'_n),(d_1,...,d_n)}(k)$ is a coefficient of a second-order part $F^2(k)$ of the matrix F(k),

and $F(k) = F^0(k) + F^1(k) + F^2(k)$,

said processor (5) being further arranged to determine a propagator P as a time product of the matrices F(k) for approximating a final state $\rho_f$ of the density operator $\rho$ based on an initial state $\rho_0$ of said density operator p,

the device (1) being arranged to receive as inputs a Lindblad master equation defining the dynamics of the density operator $\rho$ of an open quantum system including one or more quantum entities to be simulated, along with the respective decoherence-free spaces $D_{0,q}$ of said one or more quantum entities and an initial state $\rho_0$ of said density operator p, to execute said processor (5) with said inputs and derive an approximated final state $\rho_f$ of the density operator $\rho$.

2. The device (1) of claim 1, wherein the processor (5) is arranged to apply an explicit Euler scheme as the explicit method.

3. The device (1) of claim 1 or 2, wherein the processor (5) is arranged to apply the Kraus map formulation using the following Kraus map:

$$K_0(\rho) = U(\bar{M}U\rho U^\dagger \bar{M}^\dagger + \Delta t\left(\sum_v \bar{L}_v U\rho U^\dagger \bar{L}_v^\dagger\right))U^\dagger$$

with:

$$U = e^{-i\Delta t H/2}$$

$$\bar{M} = MS^{-\frac{1}{2}}$$

$$\bar{L}_v = L_v S^{-\frac{1}{2}}$$

where: $M = I - \sum_v \frac{\Delta t}{2}L_v^\dagger L_v$ and $S = M^\dagger M + \Delta t \sum_v L_v^\dagger L_v$ ,

and where: $\Delta t$ is the time step of the explicit method, $L_v$ is a $v$-th Lindblad operator and H is a Hamiltonian of the Lindblad master equation.

4. The device (1) of one of the preceding claims, wherein the perturbation $K_1$ is time independent and the processor (5) is arranged to determine the propagator $P = e^{T\frac{F}{\Delta t}}$ , where $\Delta t$ is the time step of the explicit method and T is a time quantity over which the Lindblad master equation rules the open quantum system.

5. The device (1) of one of claims 1 to 3, wherein the perturbation $K_1$ is time dependent and the processor (5) is arranged to determine the propagator as a time-ordered product $P = \prod_{k=0}^{A} F(T - \sum_{j=0}^{k} \Delta t_j)$ , where $\Delta t_k$ is the time step of the explicit method corresponding to the k-th time value of the time-discrete density operator, T is a time quantity over which the Lindblad master equation rules the open quantum system, A is the number of time step $\Delta t_k$ over the time quantity T, and $\Delta t_0$ is equal to 0 by convention.

6. The device (1) of one of the preceding claims, wherein said device (1) is arranged to receive as inputs a Lindblad master equation defining the dynamics of the density operator $\rho$ of an open quantum system including only one quantum entity to be simulated, and wherein the processor (5) is arranged to determine a Q-order approximation of the matrix modeling the time evolution of the time-discrete density operator of the open quantum system, Q being an integer greater than two, by implementing the following recurrence process:

$$F_{d',d}^r = Tr(J_{d'} K_1(S_d^{r-1}))$$

with:

$$S_d^r = \lim_{i \to +\infty} [K_0 + W_d^r]^i (0)$$

$$W_d^r = K_1(S_d^{r-1}) - \sum_{s=1}^{r} \sum_{d'=1}^{d_0} F_{d',d}^s S_{d'}^{r-s}$$

where: $d_0$ is the dimension of the decoherence-free space $D_0$ of the open quantum system, and $F_{d',d}^r$ is a coefficient of a r-order part $F^r$ of the matrix F, and $F = \sum_{r=0}^{Q} F^r$ .

7. The device (1) of one of the preceding claims, wherein said device (1) is arranged to receive as inputs a Lindblad master equation defining the dynamics of the density operator $\rho$ of an open quantum system that is a quantum logic gate.

8. The device (1) of claim 7, wherein said device (1) is arranged to receive as inputs a Lindblad master equation defining the dynamics of the density operator $\rho$ of an open quantum system that is a Z-gate, a ZZ-gate, a ZZZ-gate, a CNOT-gate or a Toffoli-gate.

9. A method for simulating an open quantum system including one or more quantum entities, the open quantum system having a Hilbert space H and the one or more quantum entities each having a respective Hilbert space $H_q$, such that $H = \bigotimes_{q=1}^{n} H_q$ , where n is the number of quantum entities and $\otimes$ denotes the tensor product,

the one or more quantum entities each having a respective decoherence-free space $D_{0,q}$ which are exponential attractors and define together a decoherence-free space $D_0$ of the open quantum system with $D_0 = \bigotimes_{q=1}^{n} D_{0,q}$ , each decoherence-free space $D_{0,q}$ having a respective orthonormal Hermitian basis $\{S_{q,d_q}^0, d_q \in [\![1, d_{0,q}]\!]\}$ , where $S_{q,d_q}^0$ is the $d_q$-th Hermitian of the orthonormal Hermitian basis of the decoherence-free space $D_{0,q}$ of the q-th quantum entity and $d_{0,q}$ is the dimension of the decoherence-free space $D_{0,q}$ of the q-th quantum entity,

said method being implemented by the device (1) of one of the preceding claims and comprising the following operations:

- receiving (200) as inputs a Lindblad master equation defining the dynamics of a density operator $\rho$ of an open quantum system including one or more quantum entities to be simulated, said dynamics including at least a sum of quantum entity specific local nominal dynamics, along with the respective decoherence-free spaces $D_{0,q}$ of said one or more quantum entities and an initial state $\rho_0$ of said density operator p,
- applying (210) an explicit method to said Lindblad master equation for generating a discrete-time expression thereof, splitting said discrete-time expression of the Lindblad master equation into a local nominal dynamics portion and a perturbation portion $K_1$ with an amplitude of said perturbation portion being at least five times smaller than an amplitude of said local nominal dynamics portion,
- applying (220) a trace-preserving and completely-positive linear Kraus map formulation to said local nominal dynamics portion such that the Kraus map $K_0$ of said local nominal dynamics portion is derived from the respective Kraus maps $K_{0,q}$ of said quantum entity specific local nominal dynamics with

$$K_0 = \bigotimes_{q=1}^n K_{0,q}$$

, such that $\rho_{k+1} = K_0(\rho_k) + K_1(\rho_k)$, where $\rho_k$ is the k-th time value of the time-discrete density operator,

- determining (230) a finite set of local operators $L_{q,\mu}^1$ and $R_{q,\mu}^1$ on the Hilbert space $H_q$ such that, for any operator W on the Hilbert space H verifying $W = \bigotimes_{q=1}^n W_q$, $W_q$ being a local operator on the Hilbert space $H_q$:

$$K_1(W) = \sum_\mu \bigotimes_{q=1}^n L_{q,\mu}^1 W_q R_{q,\mu}^1$$

,

- calculating (240) invariant operators $J_{q,d_q} = \lim_{k \to +\infty} \left[K_{0,q}^*\right]^k (S_{q,d_q}^0)$ of each quantum entity, where $K_{0,q}^*$ is the conjugate transpose of the local nominal dynamics portion $K_{0,q}$ of the q-th quantum entity,

- determining (250) a second-order approximation of matrices F(k) modeling the time evolution of the time-discrete density operator of the open quantum system by computing:

$$F^0(k) = I$$

$$F_{(d_1',\dots,d_n'),(d_1,\dots,d_n)}^1(k) = \sum_\mu \prod_{q=1}^n Tr(J_{\mu,q,d_q'}^1(k) S_{q,d_q}^0)$$

$$F_{(d_1',\dots,d_n'),(d_1,\dots,d_n)}^2(k)$$

$$= \sum_{i=0}^{+\infty} (\sum_{\mu,\mu'} \prod_{q=1}^n Tr\left(J_{\mu',q,d_q'}^1(k) \left[K_{0,q}\right]^k \left(S_{\mu,q,d_q}^1(k)\right)\right)$$

$$- \prod_{q=1}^n \sum_{d_q''} Tr(J_{\mu',q,d_q'}^1(k) S_{q,d_q''}^0) Tr(J_{\mu,q,d_q''}^1(k) S_{q,d_q}^0))$$

with :

$$J^1_{\mu,q,d'_q}(k) = R^1_{q,\mu}(k) J_{q,d'_q} L^1_{q,\mu}(k)$$

$$S^1_{\mu,q,d_q}(k) = L^1_{q,\mu}(k) S^0_{q,d_q} R^1_{q,d_q}(k)$$

where : I is the identity matrix on the Hilbert space H, $F^0(k)$ is a zero-order part of the matrix F(k),

$$F^1_{(d'_1,...,d'_n),(d_1,...,d_n)}(k)$$ is a coefficient of a first-order part $F^1(k)$ of the matrix F(k),

$$F^2_{(d'_1,...,d'_n),(d_1,...,d_n)}(k)$$ is a coefficient of a second-order part $F^2(k)$ of the matrix F(k),
and $F(k) = F^0(k) + F^1(k) + F^2(k)$,

- determining (260) a propagator P as a time product of the matrices F(k), and
- deriving (270) an approximated final state $\rho_f$ of the density operator $\rho$ by applying said propagator P to the initial state $\rho_0$ of said density operator $\rho$ of the open quantum system.

**10.** A computer program comprising instructions whose execution, by a processor (5), results in the implementation of the method of claim 9.

**11.** A computer-readable storage medium comprising the computer program of claim 10 stored thereon.

## FIG. 1

## FIG. 2

$|\chi|$

FIG. 3

$|\chi|$

FIG. 4

$ZZ$ Gate, $Z$ Errors

- Schrodinger, $N = 41$
- $Z_1 Z_2$
- $Z_1 = Z_2$
- Theory

$|\alpha|^2$

## FIG. 5

$ZZ$ Gate, $X$ Errors

- Schrodinger, $N = 41$
- Heisenberg, $N = 100$

$|\alpha|^2$

## FIG. 6

37

FIG. 7

FIG. 8

FIG. 9

FIG. 10

FIG. 11

FIG. 12

FIG. 13

FIG. 14

FIG. 15

Europäisches
Patentamt

European
Patent Office

Office européen
des brevets

## EUROPEAN SEARCH REPORT

**Application Number**

**EP 23 30 5313**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | P D Nation ET AL: "QuTiP: Quantum Toolbox in Python Release 4.2.0", , 17 January 2018 (2018-01-17), XP055694509, Retrieved from the Internet: URL:http://qutip.org/downloads/4.2.0/QuTiP_4.2.pdf * Sections 1.4, 3.5.2 * | 1-11 | INV. G06N10/60 G06N10/20 |

**TECHNICAL FIELDS SEARCHED (IPC)**

G06N

The present search report has been drawn up for all claims

| Place of search | Date of completion of the search | Examiner |
|---|---|---|
| The Hague | 10 July 2023 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................
& : member of the same patent family, corresponding document